# EUROPÄISCHE PATENTANMELDUNG

(11) **EP 4 693 531 A1**
(43) Veröffentlichungstag der Anmeldung: **11.02.2026**
(21) Anmeldenummer: 25193658.9
(22) Anmeldetag: 04.08.2025
(51) Int. Cl.: H01M 8/0234, H01M 8/0239, H01M 8/0243, H01M 8/0245, H01M 8/10

(54) **GASDIFFUSIONSLAGE MIT EINER GROSSPORIGEN MIKROPORÖSEN LAGE MIT ZUR OBERFLÄCHE HIN ABGEDECKTEN POREN UND VERFAHREN ZU IHRER HERSTELLUNG**

(30) Priorität: 06.08.2024 DE 102024122380; 07.08.2024 EP 24193319
(71) Anmelder: Carl Freudenberg KG, 69469 Weinheim (DE)
(72) Erfinder: LANGNER, Dr. Joachim, 76709 Kronau (DE); BOCK, Achim, 69469 Weinheim (DE); ELSISHANS, Sabrina, 69488 Birkenau (DE); KLEIN, Kristof, 69469 Weinheim (DE); SALAMA, Karim, 69469 Weinheim (DE); KAISER, Uwe, 69502 Hemsbach (DE)

(57) **Zusammenfassung**

Die vorliegende Erfindung betrifft eine Gasdiffusionslage für Brennstoffzellen mit einem flächigen elektrisch leitfähigen Fasermaterial und einer mikroporösen Lage mit einer hohen Gas- und Wasserdurchlässigkeit, die zur Oberfläche hin abgedeckte Poren und zum flächigen elektrisch leitfähigen Fasermaterial hin offene Poren aufweist. Die Erfindung betrifft weiterhin ein Verfahren zur Herstellung einer solchen Gasdiffusionslage, eine Brennstoffzelle, die eine solche Gasdiffusionslage enthält, und die Verwendung einer solchen Gasdiffusionslage zur Verbesserung der Gas- und/oder Wasserdurchlässigkeit einer Brennstoffzelle.

## Beschreibung

Die vorliegende Erfindung betrifft eine Gasdiffusionslage für Brennstoffzellen mit einem flächigen elektrisch leitfähigen Fasermaterial und einer mikroporösen Lage mit einer hohen Gas- und Wasserdurchlässigkeit, die zur Oberfläche hin abgedeckte Poren und zum flächigen elektrisch leitfähigen Fasermaterial hin offene Poren aufweist. Die Erfindung betrifft weiterhin ein Verfahren zur Herstellung einer solchen Gasdiffusionslage, eine Brennstoffzelle, die eine solche Gasdiffusionslage enthält, und die Verwendung einer solchen Gasdiffusionslage zur Verbesserung der Gas- und/oder Wasserdurchlässigkeit einer Brennstoffzelle.

### HINTERGRUND DER ERFINDUNG

Brennstoffzellen nutzen die chemische Umsetzung eines Brennstoffs, insbesondere von Wasserstoff, mit Sauerstoff zu Wasser, um elektrische Energie zu erzeugen. In Wasserstoff-Sauerstoff-Brennstoffzellen wird Wasserstoff oder ein wasserstoffhaltiges Gasgemisch der Anode zugeführt, wo eine elektrochemische Oxidation unter Abgabe von Elektronen stattfindet (H₂ → 2 H⁺ + 2 e⁻). Über eine Membran, welche die Reaktionsräume gasdicht voneinander trennt und elektrisch isoliert, erfolgt ein Transport der Protonen aus dem Anodenraum in den Kathodenraum. Die an der Anode bereitgestellten Elektronen werden über einen äußeren Leiterkreis der Kathode zugeleitet. Der Kathode wird Sauerstoff oder ein sauerstoffhaltiges Gasgemisch zugeführt, wobei eine Reduktion des Sauerstoffs unter Aufnahme der Elektronen stattfindet. Die dabei gebildeten Sauerstoffanionen reagieren mit den über die Membran transportierten Protonen unter Bildung von Wasser (1/2 O₂ + 2 H⁺ + 2 e⁻ → H₂O).

Für viele Anwendungen, speziell im automobilen Antriebsstrang, werden Protonenaustauschmembran-Brennstoffzellen eingesetzt, die auch als Polymerelektrolyt-Brennstoffzellen oder Polymer-Elektrolyt-Membran-Brennstoffzellen bezeichnet werden (englisch PEMFC = proton exchange membrane fuel cells, auch polymer electrolyte membrane fuel cells). Eine spezielle Ausführung sind Wasser-Sauerstoff-Brennstoffzellen in Form von Niedertemperatur-Protonenaustauschmembran-Brennstoffzellen (LT-PEMFC). Kernstück der Protonenaustauschmembran-Brennstoffzellen ist eine Polymer-Elektrolyt-Membran (PEM), die nur für Protonen (bzw. Oxoniumionen H₃O⁺) und Wasser durchlässig ist und das Oxidationsmittel, im Allgemeinen Luftsauerstoff, räumlich vom Reduktionsmittel trennt. Auf die gasdichte, elektrisch isolierende, protonenleitende Membran ist auf der Anoden- und Kathodenseite eine Katalysatorschicht aufgebracht, die die Elektroden ausbildet und die in der Regel Platin als katalytisch aktives Metall enthält. In den Katalysatorschichten laufen die eigentlichen Redoxreaktionen und Ladungstrennungen ab. Membran und Katalysatorschichten bilden eine Einheit, die auch als CCM (catalyst coated membrane) bezeichnet wird.

Auf beiden Seiten der CCM befindet sich in der Regel eine Gasdiffusionslage (GDL), die den Zellaufbau stabilisiert und Transport- und Verteilerfunktionen für Reaktionsgase, Wasser, Wärme und Strom übernimmt. Membran, Elektroden und Gasdiffusionslage bilden die Membran-Elektroden-Einheit (MEA, membrane electrode assembly). Zwischen den Membran-Elektroden-Einheiten sind Strömungsverteilerplatten (sogenannte Bipolarplatten) angeordnet, die Kanäle zur Versorgung der angrenzenden Kathode und Anode mit Prozessgasen sowie in der Regel zusätzlich innenliegende Kühlkanäle aufweisen.

Gasdiffusionslagen für Brennstoffzellen bestehen typischerweise aus einem leitfähigen Kohlefaser-Substrat, welches mit hydrophoben Polymeren ausgerüstet ist, wobei vielfach noch Fluor-Polymeren (z. B. PTFE) zum Einsatz kommen. Das Fasermaterial wird in der Regel mit einer mikroporösen Lage (MPL) flächig beschichtet, die ein elektrisch leitfähiges Material in einer Matrix aus einem polymeren Binder umfasst. Als elektrisch leitfähige Materialien werden häufig Kohlenstoffmaterialien, wie Ruß oder Graphit-Pulver, und als polymere Binder fluorhaltige Polymere (z. B. PTFE) eingesetzt. Den Gasdiffusionslagen kommt eine wesentliche Bedeutung für die Funktion und Leistungsfähigkeit der Brennstoffzelle zu. Durch sie werden zum einen die in den Elektrodenreaktionen verbrauchten und entstehenden Prozesskomponenten transportiert und zum anderen die in den Halbzellenreaktionen gebildeten und verbrauchten Elektronen und die bei der Reaktion gebildete Wärme zu den Strömungsverteilerplatten geleitet.

Um einen optimalen Wasserhaushalt und Gastransport in der Brennstoffzelle zu gewährleisten muss die MPL über eine ausreichende Hydrophobizität und geeignete Porenstruktur verfügen. Zur Erzeugung von Poren kann beispielsweise den zur Herstellung der MPL verwendeten Zusammensetzungen (MPL-Pasten) ein Porenbildner zugesetzt werden. Bekannt ist z.B. der Einsatz von Polymerpartikeln, die ein unter den Herstellungsbedingungen zersetzbares Polymer, wie Polymethylmethacrylat (PMMA), enthalten. Bekannt ist weiterhin der Einsatz von wasserlöslichen Partikeln, die ausgewaschen werden können und von gasbildenden Verbindungen, die bei thermischer Behandlung ausgasen und somit Blasen in Form von Poren bilden. Es besteht weiterhin ein Bedarf an Gasdiffusionslagen mit MPLs, die einen sehr hohen Massentransport von Gasen und Flüssigkeiten zwischen den Bipolarplatten und der CCM ermöglichen. Die eingesetzten MPLs sollen zusätzlich eine Oberfläche aufweisen, die einen guten elektrischen Kontakt mit der Katalysatorschicht ermöglicht. Desweiteren soll die Katalysatorschicht vor mechanischer Beschädigung und vor einem Austrocknen geschützt werden.

Gasdiffusionslagen für Brennstoffzellen, die ein- oder mehrlagig ausgeführt sein können, speziell in Form eines makroskopischen Substrats und einer darauf angeordneten mikroporösen Lage, sind beispielhaft in folgenden Dokumenten beschrieben:
DE 102016123910 A1, DE 102013207900 A1, EP 2722919 B1, DE 102023118887 A1,
DE 102022131492 B3, DE 102022127234 A1 und DE 102018205571 A1.

L. Chen et al. berichten in J. Power Sources 467 (2020), 228355 über den Einfluss der Struktur der Gasdiffusionslage auf die Leistung von Protonenaustauschmembran-Brennstoffzellen. Es wurde gezeigt, dass MPLs mit einem Porositätsgradienten auf einem dünnen makroporösen GDL-Substrat das beste Wassermanagement aufwiesen. Zur Herstellung von MPLs unterschiedlicher Porosität wurden unterschiedliche Mengen an Ammoniumchlorid als Porenbildner eingesetzt.

G. Ren et al. berichten in Int. J. Hydrogen Energy 52 (2024), 1161-1172 über die Verbesserung der Performance von Protonenaustauschmembran-Brennstoffzellen durch nanostrukturierte Gasdiffusionslagen (nano-GDLs) mit Gradienten bezüglich der Porengröße.

Die CN 114430050 B beschreibt ein Verfahren zur Herstellung einer Gasdiffusionslage für eine Hochleistungs-Wasserstoff-Brennstoffzelle, umfassend die folgenden Schritte:
S1: Hydrophobieren eines porösen Trägermaterials durch Eintauchen in eine hydrophobe Aufschlämmung;
S2: Herstellen eines ersten Verbundmaterials durch Verpressen des porösen Trägermaterials mit einem vorgefertigten Folienmaterial zur Ausbildung einer ersten mikroporösen Schicht. Zur Herstellung des Folienmaterials werden Kohlenstoffpulver, ein Fluorkohlenstoffmaterial, ein Aerogel auf Kohlenstoffbasis, ein Bindemittel auf Fluorbasis und eine filmbildende Substanz heiß zu einer folienartigen Schicht gepresst; und
S3: Herstellung der Gasdiffusionsschicht durch Aufbringen einer Aufschlämmung zur Ausbildung einer zweiten mikroporösen Schicht, umfassend Kohlenstoffpulver, Bindemittel auf Fluorbasis, Dispergiermittel und Wasser und anschließendes Trocknen und Sintern.

Die EP 4303968 A2 beschreibt eine Gasdiffusionslage für eine Brennstoffzelle, umfassend
a) ein flächiges elektrisch leitfähiges Fasermaterial und
b) eine mikroporöse Lage auf einer der Flächen des Fasermaterials,
wobei die Gasdiffusionslage in Bezug auf ihre Grundfläche (in der x,y-Ebene) wenigstens einen Eigenschaftsgradienten bezüglich wenigstens einer chemischen und/oder physikalischen Eigenschaft aufweist.

Die EP 4358197 A1 beschreibt ein Verfahren zur Herstellung einer Gasdiffusionslage für eine Brennstoffzelle, umfassend
A) ein flächiges elektrisch leitfähiges Fasermaterial und
B) eine mikroporöse Lage auf wenigstens einer der Flächen des Fasermaterials, wobei die mikroporöse Lage in Bezug auf die Grundfläche der Gasdiffusionslage (in der x,y-Ebene) wenigstens einen Eigenschaftsgradienten bezüglich wenigstens einer chemischen und/oder physikalischen Eigenschaft aufweist,
bei dem man
i) ein flächiges elektrisch leitfähigen Fasermaterial A) bereitstellt,
ii) das in Schritt i) bereitgestellte Fasermaterial mit einem Precursor zur Ausbildung einer mikroporösen Lage beschichtet, wobei die Zusammensetzung des Precursors zur Erzeugung eines Gradienten variiert wird,
iii) das in Schritt ii) erhaltene beschichtete Fasermaterial einer Nachbehandlung bei erhöhtem Druck und gegebenenfalls erhöhter Temperatur unterzieht.

Die US 2014/0134516 A1 beschreibt eine Gasdiffusionslage für eine Brennstoffzelle, umfassend:
- ein GDL-Substrat und
- eine zweilagige MPL mit einer ersten MPL-Schicht auf Seiten des Substrats, die ein Kohlenstoffgranulat (granular carbon material) aber kein schuppenförmiges Graphit (scale-like graphite) enthält, und einer zweiten MPL-Schicht auf Seiten der Katalysatorschicht, die ein schuppenförmiges Graphit (scale-like graphite) enthält,
wobei die MPL einen konzentrierten Bereich enthält, der sich gürtelförmig im wesentlichen parallel zu einer Verbindungsschicht zwischen MPL und GDL-Substrat erstreckt. Die Dicke der ersten mikroporösen Schicht liegt in einem Bereich von 10 bis 100 µm und die Dicke der zweiten mikroporösen Schicht ist kleiner oder gleich 10 µm. In einer besonderen Ausführungsform enthält die zweite mikroporöse Schicht ein Bindemittel, den schuppenförmigen Graphit und Ruß und/oder Graphitgranulat. Der konzentrierte Bereich des schuppenförmigen Graphits soll den Kontaktwiderstand zwischen Katalysatorschicht und MPL und zwischen GDL und MPL verringern und ein Austrocknen der Elektolytmembran verhindern. Der schuppenartige Graphit weist eine hohe Kristallinität und eine geringe Dicke H (Ausdehnung in z-Richtung) im Verhältnis zum mittleren Durchmesser D der von der x- und y-Achse aufgespannten Fläche (mittlerer Flächendurchmesser D) auf. Bevorzugt liegt Dicke H des schuppenartigen Graphits im Bereich von 0,05 µm bis 1 µm und der mittlere Flächendurchmesser D im Bereich von 5 µm bis 50 µm. Der mittlere Teilchendurchmesser des Kohlenstoffgranulats liegt vorzugsweise im Bereich von 100 nm bis 10 µm. Als Kohlenstoffgranulats kann zum Beispiel Graphitgranulat oder Ruß verwendet werden. Das Graphitgranulat hat wie der schuppenartige Graphit eine hohe Kristallinität, aber ein geringes Aspektverhältnis (Verhältnis mittlerer Flächendurchmesser D/Dicke H). Der mittlere Teilchendurchmesser des Graphitgranulats liegt vorzugsweise im Bereich von 1 µm bis 10 µm. Ruß umfasst feine Kohlenstoffpartikel. Der mittlere Teilchendurchmesser des Rußes ist vorzugsweise kleiner als oder gleich 1 µm und liegt vorzugsweise im Bereich von 10 nm bis 100 nm. Die Ausführungsformen für die zweite MPL-Schicht enthalten in jedem Falle flachen schuppenförmigen Graphit (Gf), sowie ggf. schuppenförmigen Graphit geringeren Durchmessers (Gfs), Graphitgranulat (Gg) und zusätzlich optional Ruß. Die Ausführungsformen für die erste MPL-Schicht enthalten entweder nur Ruß oder ein Gemisch aus Ruß und Graphitgranulat (Gg). Dieses Dokument lehrt nicht, eine zweilagige MPL einzusetzen, wobei die substratseitige (innere) Schicht offenzellig ist und einen großen mittlere Porendurchmesser aufweist und die zweite (äußere) Schicht geschlossenzellig ist.

Die KR 2023 0090754 beschreibt ein Verfahren zur Herstellung einer Gasdiffusionslage, bei dem man
- ein Kohlefasersubstrat bereitstellt,
- eine erste Mischung aus Kohlenstoff-Pulver, PTFE, einem Porenbildner und einem Lösungsmittel herstellt,
- in einem ersten Beschichtungsschritt das Kohlefasersubstrat zur Ausbildung einer ersten mikroporösen Lage mit der ersten Mischung beschichtet,
- eine zweite Mischung aus Kohlenstoff-Pulver, PTFE, und einem Lösungsmittel herstellt,
- in einem zweiten Beschichtungsschritt das mit der ersten Mischung beschichtete Kohlefasersubstrat zur Ausbildung einer zweiten mikroporösen Lage mit der zweiten Mischung beschichtet,
- in einem Porenbildungsschritt die in der zweiten MPL enthaltenen Komponenten einer Sinterung unterzieht.

Die erste und zweite MPL können auf gleichen oder verschiedenen Seiten des Substrats aufgetragen werden. Die zweite Beschichtungsmischung enthält keinen Porenbildner oder weniger Porenbildner als die erste Beschichtungsmischung. Es wird nur der Einsatz von Kohlenstoffpulver in beiden Beschichtungsmischungen beschrieben, wobei es sich um diverse Ruße handeln kann. Der Einsatz von Graphit ist nicht beschrieben. Es wird auch nicht gelehrt, eine zweilagige MPL einzusetzen, wobei die substratseitige (innere) Schicht offenzellig ist und einen großen mittlere Porendurchmesser aufweist und die zweite (äußere) Schicht geschlossenzellig ist.

Die JP2016015216A beschreibt eine Gasdiffusionslage mit 2 mikroporösen Lagen, die sich hinsichtlich der Dicke, Porosität und Porengrößen unterscheiden. Die erste (innere) MPL hat eine Dicke von 150 µm oder weniger, eine Porosität von 80% oder mehr und einen Porendurchmesser im Bereich von 10 µm bis 100 µm. Die zweite (äußere) MPL hat eine Dicke im Bereich von 0,1 bis 10 µm, eine Porosität im Bereich von 40% bis 70%, und einen Porendurchmesser von weniger als 0,1 µm, bei einer Gesamtdicke der mikroporösen Schicht von 10 µm bis 60 µm.

Die EP 3709409 A1 beschreibt eine mikroporöse Lagenstruktur für eine Brennstoffzelle, mit einer ersten (inneren) Lage mit hoher Wasserdampfpermeabilität und einer zweiten (äußeren) Lage mit geringer Wasserdampfpermeabilität, wobei die mikroporösen Lagen einen Gradienten zwischen Lufteinlass und Luftauslass aufweisen und in Richtung des Luftstroms die Dicke der mikroporösen Lage mit hoher Wasserdampfpermeabilität zunimmt und die Dicke der mikroporösen Lage mit geringer Wasserdampfpermeabilität abnimmt. Die Porositäten der mikroporösen Lagen sind sehr gering. Bevorzugt weist die mikroporöse Lage mit hoher Wasserdampfpermeabilität eine Porosität von 45-55% auf und die mikroporöse Lage mit geringer Wasserdampfpermeabilität eine Porosität von 30-40%. Zur Herstellung der mikroporösen Lagen werden Beschichtungsmittel eingesetzt, die ausschließlich feinteiliges Kohlenstoffpulver enthalten, wobei die Teilchengröße des Kohlenstoffs in dem Beschichtungsmittel zur Herstellung der ersten Lage in einem Bereich von 30 bis 60 nm, bevorzugt 45 bis 60 nm, liegt und die Teilchengröße des Kohlenstoffs in dem Beschichtungsmittel zur Herstellung der zweiten Lage in einem Bereich von 20 bis 50 nm, bevorzugt 20 bis 40 nm, liegt. Der Einsatz von Graphit und/oder von davon verschiedenen Porenbildner zur Herstellung der mikroporösen Lagen ist nicht beschrieben.

Der vorliegenden Erfindung liegt die Aufgabe zugrunde, eine mikroporöse Lage für eine Gasdiffusionslage zum Einsatz in Brennstoffzellen zur Verfügung zu stellen, die einen sehr hohen Massentransport von Gasen und Flüssigkeiten durch die Gasdiffusionslage, d.h. zwischen den Bipolarplatten einerseits und der Membran und den Katalysatorschichten (der CCM) andererseits ermöglichen. Die eingesetzten MPLs sollen eine Oberfläche aufweisen, die einen guten elektrischen Kontakt mit der Katalysatorschicht ermöglicht. Desweiteren soll die Katalysatorschicht vor mechanischer Beschädigung und vor einem Austrocknen geschützt werden.

Überraschenderweise wurde nun gefunden, dass diese Aufgabe gelöst wird, wenn man in einer Gasdiffusionslage eine mikroporösen Lage einsetzt, die wenigstens zwei Schichten umfasst, eine erste (innere) Schicht, deren eine Seite sich in Kontakt mit dem flächigen elektrisch leitfähigen Fasermaterial befindet und deren andere Seite sich in Kontakt mit der zweiten (äußeren) Schicht befindet, wobei die erste Schicht offenzellig ist und einen großen Porendurchmesser aufweist, und die zweite Schicht einen geringeren Porendurchmesser aufweist als die erste Schicht.

### ZUSAMMENFASSUNG DER ERFINDUNG

Ein erster Gegenstand der Erfindung ist eine Gasdiffusionslage für eine Brennstoffzelle, umfassend
A) ein flächiges elektrisch leitfähiges Fasermaterial,
B) eine mikroporöse Lage, enthaltend leitfähige Partikel in einer Matrix aus einem polymeren Bindemittel, wobei die mikroporöse Lage
   B1) eine erste offenzellige Schicht auf wenigstens einer der Flächen des Fasermaterials A), und
   B2) eine zweite gas- und wasserdurchlässige Schicht auf der ersten Schicht B1), die einen geringeren Porendurchmesser aufweist als die Schicht B1),
umfasst,
erhältlich durch ein Verfahren, bei dem man
   i) ein flächiges elektrisch leitfähiges Fasermaterial A) bereitstellt,
   ii) das in Schritt i) bereitgestellte Fasermaterial mit einem ersten Beschichtungsmittel zur Ausbildung einer ersten mikroporösen Schicht beschichtet,
      wobei auf das Fasermaterial A) vor der Beschichtung in Schritt ii) ein Porenbildner aufgetragen wird und/oder das in Schritt ii) eingesetzte Beschichtungsmittel einen Porenbildner enthält,
   iii) die in Schritt ii) erhaltene erste Beschichtung mit einem zweiten Beschichtungsmittel zur Ausbildung einer zweiten mikroporösen Schicht beschichtet,
   iv) das in Schritt iii) erhaltene mit dem ersten und dem zweiten Beschichtungsmittel beschichtete Fasermaterial einer Behandlung zur Erzeugung von Poren aus dem Porenbildner unterzieht.

Ein weiterer Gegenstand der Erfindung ist eine Gasdiffusionslage für eine Brennstoffzelle, umfassend
A) ein flächiges elektrisch leitfähiges Fasermaterial,
B) eine mikroporöse Lage, enthaltend leitfähige Partikel in einer Matrix aus einem polymeren Bindemittel, wobei die mikroporöse Lage
   B1) eine erste offenzellige Schicht auf wenigstens einer der Flächen des Fasermaterials A), und
   B2) eine zweite gas- und wasserdurchlässige Schicht auf der ersten Schicht B1)
umfasst,
wobei die Größe der größten Durchgangspore der Gasdiffusionslage, bezogen auf das flächige elektrisch leitfähige Fasermaterial A) und die erste Schicht B1), bestimmt durch Kapillarfluss-Porometrie-Messung nach der ASTM F-316:2003 wenigstens 30,00 µm beträgt und
wobei der mittlere Porendurchmesser der Gasdiffusionslage, bezogen auf das flächige elektrisch leitfähige Fasermaterial A), die erste Schicht B1) und die zweite Schicht B2), bestimmt durch Kapillarfluss-Porometrie-Messung nach der ASTM F-316:2003 höchstens 8,00 µm beträgt.

In einer speziellen Ausführungsform wird zur Ausbildung der ersten mikroporösen Schicht B1) ein Porenbildner eingesetzt, der ausgewählt ist unter
- α: Porenbildnern, die sich bei Erhitzen auf eine Temperatur oberhalb der Porenbildungstemperatur unter Bildung einer Gasphase zersetzen oder die ein Gas freisetzen, vorzugsweise ausgewählt unter
α 1 Kunststoffpartikeln, vorzugsweise ausgewählt unter Acryl-Homo- und Copolymeren, Polymethyl(meth)acrylaten, Acryl-modifizierten Polystyrolen, speziell Styrol-Methylmethacrylat-Copolymeren, Polyvinylidenchlorid, etc.
α 2 expandierbaren Mikrosphären, vorzugsweise expandierbaren Mikrosphären, umfassend eine thermoplastische Hülle und eine eingeschlossene gasbildende Komponente,
α 3 natürlichen Polymeren, vorzugsweise ausgewählt unter Agar, Alginaten, Gelatine oder Stärke,
α 4 gasfreisetzenden Verbindungen, vorzugsweise ausgewählt unter Alkali- und Ammoniumhydrogencarbonaten, Alkali- und Ammoniumcarbonaten, vorzugsweise Natriumhydrogencarbonat und/oder Ammoniumhydrogencarbonat,
- β: Porenbildnern, die zur Ausbildung von Poren durch Behandlung mit einem Lösungsmittel befähigt sind, vorzugsweise ausgewählt unter Zuckern,
- γ: Mischungen davon.

In einer speziellen Ausführungsform ist das zweite Beschichtungsmittel zur Ausbildung der zweiten mikroporösen Schicht B2) frei von zugesetzten Porenbildnern. Das zweite Beschichtungsmittel zur Ausbildung der zweiten mikroporösen Schicht B2) ist insbesondere frei ist von Porenbildnern, die sich bei Erhitzen auf eine Temperatur oberhalb der Porenbildungstemperatur unter Bildung einer Gasphase zersetzen oder die ein Gas freisetzen und Porenbildnern, die zur Ausbildung von Poren durch Behandlung mit einem Lösungsmittel befähigt sind.

Ein weiterer Gegenstand der Erfindung ist ein Verfahren zur Herstellung einer Gasdiffusionslage für eine Brennstoffzelle, umfassend
A) ein flächiges elektrisch leitfähiges Fasermaterial,
B) eine mikroporöse Lage, enthaltend leitfähige Partikel in einer Matrix aus einem polymeren Bindemittel, wobei die mikroporöse Lage
   B1) eine erste offenzellige Schicht auf wenigstens einer der Flächen des Fasermaterials A), und
   B2) eine zweite gas- und wasserdurchlässige Schicht auf der ersten Schicht B1)
umfasst,
bei dem man
i) ein flächiges elektrisch leitfähiges Fasermaterial A) bereitstellt,
ii) das in Schritt i) bereitgestellte Fasermaterial mit einem ersten Beschichtungsmittel zur Ausbildung einer ersten mikroporösen Schicht beschichtet,
   wobei auf das Fasermaterial A) vor der Beschichtung in Schritt ii) ein Porenbildner aufgetragen wird und/oder das in Schritt ii) eingesetzte Beschichtungsmittel einen Porenbildner enthält,
iii) die in Schritt ii) erhaltene erste Beschichtung mit einem zweiten Beschichtungsmittel zur Ausbildung einer zweiten mikroporösen Schicht beschichtet,
iv) das in Schritt iii) erhaltene mit dem ersten und dem zweiten Beschichtungsmittel beschichtete Fasermaterial einer Behandlung zur Erzeugung von Poren aus dem Porenbildner unterzieht.

Ein weiterer Gegenstand der Erfindung ist eine Brennstoffzelle, umfassend wenigstens eine Gasdiffusionslage, wie zuvor und im Folgenden definiert.

In einer bevorzugten Ausführungsform umfasst die Brennstoffzelle eine Polymer-Elektrolyt-Membran, auf die eine Katalysatorschicht aufgebracht ist, wobei die Katalysatorschicht mit der Oberfläche der zweiten mikroporösen Lage B2) der Gasdiffusionslage in Kontakt ist.

Ein weiterer Gegenstand der Erfindung ist ein Brennstoffzellstapel, umfassend eine Vielzahl von Brennstoffzellen, wie zuvor und im Folgenden definiert.

Ein weiterer Gegenstand der Erfindung ist die Verwendung einer Gasdiffusionslage wie zuvor und im Folgenden definiert, in einer Brennstoffzelle zur Verbesserung der Gas- und/oder Wasserdurchlässigkeit. Bevorzugt wird die Gasdiffusionslage in einer Protonenaustauschmembran-Brennstoffzelle verwendet.

### BESCHREIBUNG DER ERFINDUNG

Die erfindungsgemäß eingesetzten mikroporösen Lagen, umfassen wenigstens zwei Schichten, eine erste (innere) Schicht und eine zweite (äußeren) Schicht, wobei sich eine Seite der inneren Schicht in Kontakt mit dem flächigen elektrisch leitfähigen Fasermaterial befindet und die andere Seite sich in Kontakt mit der zweiten Schicht befindet, wobei die erste Schicht offenzellig ist und bevorzugt einen großen mittleren Porendurchmesser aufweist und die zweite Schicht einen geringeren Porendurchmesser aufweist als die erste Schicht. Diese erfindungsgemäß eingesetzten mikroporösen Lagen und darauf basierende Gasdiffusionslagen haben folgende Vorteile:
- Der Einsatz von zwei unterschiedlichen Beschichtungsmitteln zur Erzeugung einer mehrlagigen MPL, wobei sich die Beschichtungsmittel in der Art des eingesetzten kohlenstoffhaltigen Materials und/oder der Menge des eingesetzten kohlenstoffhaltigen Materials und/oder durch den Einsatz zusätzlicher Porenbildner unterscheiden, wirkt sich vorteilhaft auf die Porenstruktur der MPL aus.
- Über die Eigenschaften der eingesetzten kohlenstoffhaltigen Materialien und von davon verschiedenen Porenbildnern läßt sich speziell die Größe, Ausrichtung und Verteilung der Poren in der MPL steuern. So ist es insbesondere möglich, in der innenliegenden MPL-Schicht (Schicht B1)) einen höheren Anteil an größeren, offenzelligen Poren zu erzeugen und mit der zweiten außenliegenden MPL-Schicht (Schicht B2)) eine im Wesentlichen geschlossene Oberfläche zu erzeugen.
- Die MPLs verfügen insgesamt über eine hohe Porosität und Porengröße. Die Poren weisen zur Oberfläche hin (in Kontakt mit der Katalysatorschicht) einen geringen Porendurchmesser auf und sind zum flächigen elektrisch leitfähigen Fasermaterial hin offen.
- Die erfindungsgemäße MPL ermöglicht einen sehr hohen Massentransport von Gasen und Flüssigkeiten durch die Gasdiffusionslage, d.h. zwischen den Bipolarplatten einerseits und der Membran und den Katalysatorschichten (der CCM) andererseits.
- Die Oberfläche der MPL ist glatt und kleinporig und ermöglicht einen guten elektrischen Kontakt mit der Katalysatorschicht.
- Das komplexe Eigenschaftsprofil der MPL wird durch die erfindungsgemäße MPL auch sonst nicht negativ beeinflusst. Die erhaltenen MPL zeigen einen guten Schutz der Polymermembran vor Faserpenetration durch Fasern aus dem GDL Substrat. Eigenschaften, wie Hydrophobie, Schutz vor Austrocknen, etc. und physikochemische Eigenschaften, wie die Gurley-Gaspermeabilität und die Trockendiffusionslänge, werden nicht verschlechtert.

Im Rahmen der Erfindung bezeichnet ein Vlies allgemein ein Flächengebilde, das mehrheitlich aus vereinzelten Fasern besteht, deren Zusammenhalt im Wesentlichen nur durch die ihnen eigene Haftung gegeben ist. Die Umwandlung eines Vlieses in einen Vliesstoff durch das Erzeugen eines festeren Verbundes zwischen den Fasern als er im Vlies vorliegt, erfolgt durch Verfahren der Vliesverfestigung, die meist in mechanische, chemische und thermische Verfahren unterteilt werden. Vliese, Vliesstoffe und Verfahren zu ihrer Herstellung sind in H. Fuchs, W. Albrecht, Vliesstoffe, 2. Auflage, Wiley-VCH, Weinheim, Germany beschrieben.

Gasdiffusionslagen werden im Folgenden auch als GDL und mikroporöse Lagen als MPL bezeichnet.

Zur Beschreibung des flächigen Fasermaterials A), der daraus hergestellten Zwischenprodukte und der erfindungsgemäßen Gasdiffusionslage kann ein orthogonales Koordinatensystem verwendet, wobei die Grundfläche des Fasermaterials in der von der x-Achse und der y-Achse aufgespannten Ebene (auch als x,y-Ebene bezeichnet) liegt. Die dazu orthogonale z-Achse dient zur Beschreibung der Dicke des Materials oder einzelner seiner Schichten. Gemäß der für Faserverbundmaterialien üblichen Beschreibung werden die x-Achse auch als Rollenrichtung (machine direction, MD) und die y-Achse als Gegenrollenrichtung (cross machine direction, CMD oder CD) beschrieben. In Richtung der z-Achse erfolgt im Wesentlichen der Stofftransport zwischen Strömungsverteilerplatte (Bipolarplatte) und Katalysator-beschichteter Membran (CCM).

Die Bestimmung der Dicke des leitfähigen flächigen Fasermaterials und der Gasdiffusionslage kann nach der DIN 53855-1:1993-08 "Bestimmung der Dicke textiler Flächengebilde" erfolgen.

Die Bestimmung der Dicke der MPL B) und der MPL-Schichten B1) und B2) kann durch Vermessung eines Querschnitts der GDL entlang der z-Achse (d.h. Vermessung senkrecht zur Oberfläche der GDL bzw. in der Draufsicht auf die x,z-Ebene oder die y,z-Ebene) erfolgen. Dazu kann z.B. ein Rasterelektronenmikroskop (scanning electron microscope, SEM) eingesetzt werden. Falls sich die MPL-Schicht B1) teilweise innerhalb und teilweise außerhalb des Fasermaterials A) befindet, so wird auch der Anteil der Schicht B1), der sich innerhalb des Fasermaterials A) befindet, bei der Bestimmung der Dicke der Polymerschicht B1) berücksichtigt. Im Allgemeinen lassen sich die Schichtdicken der Schichten B1) und B2) und die Eindringtiefe von B1) in das Fasermaterial A) über die Auftragsmenge der MPL-Pasten, ihren Lösungsmittelgehalt und die Viskosität, sowie die Temperatur- und Druckbedingungen beim Auftrag und der Nachbehandlung gut steuern. Somit sind die Grenzen der Polymerschichten B1) und B2) im Allgemeinen gut zu detektieren, so dass bei Durchführung mehrerer Messungen an verschiedenen Stellen und Mittelwertbildung, die Dicken der Polymerschichten B1) und B2) mit guter Genauigkeit bestimmt werden können.

Die Bestimmung der flächenbezogenen Masse in g/m² kann nach ISO 9073-1 erfolgen.

Die Bestimmung der Porosität der Gasdiffusionslage, d.h. des Komposits aus den Schichten A), B1) und B2) kann mittels Kapillarfluss-Porometrie erfolgen. Die Kapillarfluss-Porometrie-Messung ist in der DIN 66140:2022-02 bzw. der ASTM F-316:2003 beschrieben.

Die Charakterisierung der Struktur der erfindungsgemäßen Gasdiffusionslagen kann auch mittels Computertomographischer Mikroskopie (µ-CT, X-ray micro computed tomographic microscopy) erfolgen. Mit diesem Verfahren gelingt insbesondere auch die Bestimmung der mittleren Porendurchmesser der MPL und der Schichten B1) und B2).

Zur Charakterisierung der Struktur der erfindungsgemäßen Gasdiffusionslagen kann auch die Rasterelektronenmikroskopie (scanning electron microscopy, SEM) eingesetzt werden. Mit Rasterelektronenmikroskopie gelingt speziell auch die Bestimmung der mittleren Porendurchmesser der Schicht B2).

Genauere Angaben zur Kapillarfluss-Porometrie, computertomographischen Mikroskopie und Rasterelektronenmikroskopie finden sich im Folgenden unter der Überschrift "Messverfahren".

Die Bestimmung der Rauheit erfolgt nach dem Tastschnittverfahren, wie es in der DIN 4768-1:1974-08 mit dem Titel "Ermittlung der Rauheitsmeßgrößen Rₐ, R_{z}, Rₘₐₓ mit elektrischen Tastschnittgeräten; Grundlagen" beschrieben ist. Dabei bezeichnet der Mittenrauwert Rₐ den mittleren Abstand eines Messpunktes auf der Oberfläche zur Mittellinie und R_{z} bezeichnet die gemittelte Rautiefe. Die Messungen können z.B. mit einem zur Bestimmung der Rauheit geeigneten Digitalmikroskop, wie z.B. Keyence VHX-7000, durchgeführt werden. Die Werte sind jeweils Durchschnittswerte aus 6 Bestimmungen: 3 in Maschinenrichtung (MD) und 3 senkrecht zur Maschinenrichtung (CD).

### Flächiges elektrisch leitfähiges Material A)

Bei dem erfindungsgemäß eingesetzten flächigen elektrisch leitfähigen Fasermaterial und der Gasdiffusionslage handelt es sich um flächenförmige Gebilde, die über eine im Wesentlichen zweidimensionale, ebene Ausdehnung und eine demgegenüber geringere Dicke verfügen. Die Gasdiffusionslage weist eine Grundfläche auf, die in der Regel im Wesentlichen der Grundfläche der angrenzenden Membran mit den Katalysatorschichten und der Grundfläche der angrenzenden Strömungsverteilerplatte der Brennstoffzelle entspricht. Die Form der Grundfläche der Gasdiffusionslage kann beispielsweise polygonal (n-eckig mit n ≥ 3, z. B. dreieckig, viereckig, fünfeckig, sechseckig, etc.), kreisförmig, kreissegmentförmig (z. B. halbkreisförmig), ellipsenförmig oder ellipsensegmentförmig sein. Bevorzugt ist die Grundfläche rechteckig oder kreisförmig.

Die Gasdiffusionslage umfasst als Komponente A) wenigstens ein elektrisch leitfähiges flächiges Fasermaterial. Bevorzugt umfasst die Komponente A) ein Fasermaterial, das ausgewählt ist unter Vliesstoffen, Papieren, Geweben und Kombinationen davon. Geeignete Substratmaterialen sind Fasermaterialen, die selbst leitfähig sind oder durch Zugabe leitfähiger Additive, wie Kohlenstoff- oder Metallpartikel, leitfähig gemacht werden. Als Substratmaterial eignen sich prinzipiell Kohlenstofffasern, Glasfasern, Fasern organischer Polymere, wie Polypropylen, Polyester, Polyphenylensulfid, Polyetherketone, und Mischungen davon. Die in dem Fasermaterial A) enthaltenen Fasern umfassen oder bestehen vorzugsweise aus Kohlenstofffasern (Kohlefasern, Carbonfasern). Solche Fasermaterialien erfüllen besonders vorteilhaft die Anforderung an die GDL nach Gasdiffusivität, Flüssigwasserpermeabilität, elektrischer und thermischer Leitfähigkeit. Das Fasermaterial A) ist vorzugsweise ausgewählt unter Kohlefaser-Geweben, Kohlefaser-Papieren und Kohlefaser-Vliesstoffen. In einer bevorzugten Ausführungsform umfasst das Fasermaterial a) wenigstens einen Kohlefaser-Vliesstoff oder besteht das Fasermaterial a) aus einem Kohlefaser-Vliesstoff.

Die Herstellung der Kohlenstofffasern kann in üblicher Weise erfolgen, wobei als Ausgangsmaterial vorzugsweise Polyacrylnitril-Fasern (PAN-Fasern) eingesetzt werden.

Bei Kohlefasergeweben wird das flächige Fasermaterial durch das Verkreuzen von zwei Fadensystemen, Kette (Kettfäden) und Schuss (Schussfäden), hergestellt. Wie bei Textilien werden Faserbündel flexibel, aber unlösbar miteinander verbunden. Zur Herstellung von Kohlefasergeweben werden vorzugsweise oxidierte, aber noch nicht karbonisierte oder graphitierte PAN-Fasern eingesetzt. Die Karbonisierung oder Graphitierung, um dem flächigen Fasermaterial elektrische Leitfähigkeit zu verleihen, erfolgt nach dem Weben.

Zur Herstellung von Kohlefaser-Papieren werden bevorzugt graphitisierte PAN-Fasern eingesetzt. Diese werden in an sich bekannter Weise zu Faserbruchstücken zerkleinert, aufgeschlämmt und analog zur Papierherstellung durch Sieben (Bütten) ein Fasergelege hergestellt und getrocknet. In einer bevorzugten Ausführung wird in das Papier zusätzlich wenigstens ein Bindemittel eingebracht. Geeignete Bindemittel sind z. B. Phenol-, Furan-, Polyimidharze, etc. Zum Einbringen des Bindemittels kann das Papier mit diesem imprägniert und das Bindemittel gegebenenfalls anschließend gehärtet werden. Nach dem Imprägnieren und Härten wird das Kohlefaser-Papier nochmals einer Karbonisierung/Graphitisierung unterzogen, um auch das Bindemittel in Verbindungen mit verbesserter elektrischer Leitfähigkeit zu überführen. In einer weiteren geeigneten Ausführung wird zur Bereitstellung des Fasermaterials A) ein gefülltes Kohlefaser-Papier eingesetzt. Die Herstellung erfolgt zunächst wie zuvor beschrieben, jedoch wird anstelle des Einbringens eines Bindemittels und der Karbonisierung/Graphitisierung ein Füllstoff aus einem Kohlenstoffmaterial in einem polymeren Binder in das noch feuchte Papier eingebracht. Speziell wird dazu ein Kohlenstoff-PTFE-Füllstoff eingesetzt. Durch diese Füllung wird die thermische und elektrische Leitfähigkeit so erhöht, dass eine Karbonisierung/Graphitisierung entfallen kann.

Zur Herstellung von Kohlefaser-Vliesstoffen können nicht oxidierte oder oxidierte PAN-Fasern eingesetzt werden. In einer ersten bevorzugten Ausführungsform werden die Fasern in einem ersten Schritt trocken zu einem Flor gelegt (kardiert) und anschließend zu einem Vliesstoff verfestigt. Dies kann beispielsweise durch Wasserstrahlverfilzung (hydro-entangling) erfolgen, wobei die Karbonfasern orientiert, verschränkt und somit mechanisch stabilisiert werden. Gegebenenfalls kann die Dicke des verfestigten Vliesstoffs auf einen gewünschten Wert kalibriert werden. Vliesstoffe auf Basis nicht oxidierter PAN-Fasern werden nach dem Vlieslegen und Verfestigen zunächst der Oxidation bei erhöhter Temperatur und unter Sauerstoffatmosphäre und anschließend der Karbonisierung/Graphitisierung unter Inertgasatmosphäre unterzogen. Vliesstoffe auf Basis oxidierter PAN-Fasern werden nach dem Vlieslegen und Verfestigen nur einer Karbonisierung/Graphitisierung unterzogen.

In einer ersten speziellen Ausführung wird als Fasermaterial A) ein mechanisch gebundenes Fasermaterial eingesetzt. In einer weiteren speziellen Ausführung wird als Fasermaterial A) ein Vliesstoff eingesetzt, in den wenigstens ein Bindemittel eingebracht wurde, das gegebenenfalls anschließend gehärtet wurde. Geeignete Bindemittel sind z.B. Phenol-, Furan-, Polyimidharze, etc. Das Einbringen des Bindemittels kann sich z. B. an die Karbonisierung/Graphitisierung anschließen und das erhaltene imprägnierte Vlies abschließend nochmals (zur Trocknung und/oder Sinterung) thermisch behandelt werden.

Bei dem flächigen elektisch leitfähigen Material A) handelt es sich bevorzugt um einen Faserverbundwerkstoff, der ein Fasermaterial umfasst, das vorzugsweise ausgewählt unter Kohlefaser-Vliesstoffen, Kohlefaser-Geweben und Mischungen davon.

Speziell umfasst der Faserverbundwerkstoff wenigstens ein Fasermaterial und darauf aufgebracht und/oder darin eingebracht
a1) wenigstens ein polymeres Additiv,
a2) gegebenenfalls wenigstens ein leitfähigkeitsverbesserndes Additiv,
a3) gegebenenfalls wenigstens ein weiteres Additiv.

Das polymere Additiv a1) ist vorzugsweise ausgewählt unter fluorhaltigen Polymeren a11), fluorfreien hochtemperaturbeständigen Polymeren a12), davon verschiedenen Polymeren a13) und Mischungen davon.

Um die Transportvorgänge durch die GDL und an den Grenzflächen zu verbessern, kann es vorteilhaft sein, die Hydrophobizität des Fasermaterials A) zu erhöhen. Geeignete polymere Additive a1), die beispielsweise als Bindemittel wirken und gleichzeitig die Hydrophobizität erhöhen, sind fluorhaltige Polymere a11). Prinzipiell geeignet als fluorhaltige Polymere a11) sind die als polymere Bindemittel der mikroporösen Lage eingesetzten fluorhaltigen Polymere b1). Vorzugsweise enthält das Fasermaterial dann wenigstens ein fluorhaltiges Polymer a11) darauf aufgebracht und/oder darin eingebracht. Das fluorhaltiges Polymer a11) ist vorzugsweise ausgewählt unter Polytetrafluorethylenen (PTFE), Tetrafluorethylen-Hexafluorpropylen-Copolymeren (FEP), Perfluoralkoxy-Polymeren (PFA) und Mischungen davon. Perfluoralkoxy-Polymere sind z.B. Copolymere aus Tetrafluorethylen (TFE) und Perfluoralkoxyvinylethern, wie Perfluorvinylpropylether. Bevorzugt wird als Polymer a11) ein Polytetrafluorethylen eingesetzt. Das Fasermaterial kann durch übliche Imprägnierungsverfahren mit dem fluorhaltigen Polymer a11) ausgerüstet werden. Dazu kann z.B. eine PTFE-Dispersion in einem Tauchbad appliziert, das Lösungsmittel verdampft und das behandelte Fasermaterial bei erhöhten Temperaturen von in der Regel wenigstens 300 °C gesintert werden.

Bevorzugt beträgt der Massenanteil des polymeren Additivs a1) 0,5 bis 50 %, bevozugt 1 bis 40 %, bezogen auf die Masse des elektrisch leitfähigen Materials A). In einer speziellen Ausführung umfasst das polymere Additiv a1) wenigstens ein fluorhaltiges Polymer a11). Bevorzugt beträgt der Massenanteil des fluorhaltigen Polymers a11) dann 0,5 bis 40 %, bevozugt 1 bis 30 %, bezogen auf die Masse des elektrisch leitfähigen Materials A).

In einer bevorzugten Ausführung umfasst das polymere Additiv a1) wenigstens ein fluorfreies, hochtemperaturbeständiges Polymer a12), wie sie erfindungsgemäß als Komponente b2) zur Herstellung der mikroporösen Lage B) eingesetzt werden. Das fluorfreie, hochtemperaturbeständige Polymer a12) ist dann bevorzugt ausgewählt unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon. Bevorzugt beträgt der Massenanteil des fluorfreien Polymers a12) dann 0,5 bis 40 %, bevozugt 1 bis 30 %, bezogen auf die Masse des Fasermaterials A).

In einer speziellen Ausführungsform umfasst das Bindemittel a1) eine Mischung aus wenigstens einem fluorhaltigen Polymer a11) und wenigstens einem fluorfreien, hochtemperaturbeständigen Polymer a12). Bevorzugt beträgt der gesamte Massenanteil der Polymere a11) und a12) dann 0,5 bis 40 %, bevozugt 1 bis 30 %, bezogen auf die Masse des elektrisch leitfähigen Materials A).

Das Additiv a1) kann wenigstens ein weiteres von a11) und a12) verschiedenes Polymer a13) umfassen. Geeignete Polymere a13) sind z. B. ausgewählt unter Phenolharzen, Furanharzen, Polyimidharzen und Mischungen davon. Speziell enthält das polymere Additiv a1) von den fluorhaltigen Polymeren a11) und den Polymeren a12) verschiedene weitere Polymere a13) in einem Gewichtsanteil von höchstens 5 %, bevorzugt von höchstens 1 %, besonders bevorzugt von höchstens 0,5 %, insbesondere von höchstens 0,1 %, bezogen auf das Gesamtgewicht des elektrisch leitfähigen Materials A), darauf aufgebracht und/oder darin eingebracht. Noch spezieller enthält das elektrisch leitfähige Material A) keine Zusätze von weiteren Polymeren a13), die von den fluorhaltigen Polymeren a11) und den Polymeren a12) verschieden sind.

Vielfach verfügt das als elektrisch leitfähiges Material eingesetzte Fasermaterial A) bereits durch die eingesetzten Kohlenstofffasern, auch ohne leitfähigkeitsverbessernde Additive, über eine gute elektrische und thermische Leitfähigkeit. Zur Verbesserung der elektrischen und der thermischen Leitfähigkeit kann das Fasermaterial A) jedoch zusätzlich mit wenigstens einem leitfähigkeitsverbessernden Additiv a2) ausgerüstet werden. Bevorzugt ist das leitfähigkeitsverbessernde Additiv a2) ausgewählt unter Metallpartikeln, Ruß, Graphit, Graphen, Kohlenstoffnanoröhren (CNT), Kohlenstoffnanofasern und Mischungen davon. Bevorzugt umfasst das leitfähigkeitsverbessernde Additiv a2) Ruß oder besteht aus Ruß. Die Ausrüstung des Fasermaterials A) mit wenigstens einem leitfähigkeitsverbessernden Additiv a2) kann beispielsweise gemeinsam mit dem polymeren Additiv a1) und/oder weiteren Additiven a3) erfolgen.

Bevorzugt beträgt der Massenanteil des leitfähigkeitsverbessernden Additivs a2) 0,5 bis 45 %, bevozugt 1 bis 25 %, bezogen auf die Masse des Fasermaterials A). In einer speziellen Ausführungsform umfasst das leitfähigkeitsverbessernde Additiv a2) Ruß oder besteht aus Ruß und beträgt der Massenanteil 0,5 bis 45 %, bevozugt 1 bis 25 %, bezogen auf die Masse des Fasermaterials A).

Die Fasermaterialen A) können zusätzlich wenigstens ein weiteres Additiv a3) enthalten. Dazu zählen z.B. oberflächenaktive Substanzen. Die Ausrüstung des Fasermaterials A) mit wenigstens einem weiteren Additiv a3) kann gemeinsam mit dem polymeren Additiv a1) und/oder leitfähigkeitsverbessernden Additiven a2) erfolgen. Bevorzugt beträgt der Gesamtmassenanteil an weiteren Additiven a3) 0 bis 80 %, bevozugt 0 bis 50 %, bezogen auf die Masse des Fasermaterials A).

Das Fasermaterial A) weist vorzugsweise eine Dicke im Bereich von 50 bis 500 µm, besonders bevorzugt von 100 bis 400 µm auf. Diese Dicke bezieht sich auf den nicht ausgerüsteten, unkomprimierten Zustand des Fasermaterials A), d. h. vor dem Einbau der GDL in eine Brennstoffzelle.

Das Fasermaterial A) kann durch übliche Verfahren mit den Komponenten a1) und gegebenenfalls a2) und/oder a3) ausgerüstet werden. Bevorzugt wird zur Ausrüstung des Fasermaterials A) eine wässrige Dispersion eingesetzt. Geeignete Beschichtungs- und Imprägnierverfahren werden im Folgenden näher beschrieben.

In einer speziellen Ausführungsform wird das mit den Komponenten a1) und gegebenenfalls a2) und/oder a3) ausgerüstete Fasermaterial A) einer thermischen Behandlung (Trocknung und/oder Sinterung) unterzogen. Die thermische Behandlung des Fasermaterials A) erfolgt vorzugsweise bei einer Temperatur von wenigstens 250 °C, bevorzugt von wenigstens 300 °C, insbesondere in einem Bereich von 300 bis 450 °C. Die thermische Behandlung kann auch nach dem Auftrag der mikroporösen Lage B) erfolgen, wie dies im Folgenden genauer beschrieben wird.

### Mikroporöse Lage B)

Die erfindungsgemäße Gasdiffusionslage besteht aus einem mehrlagigen Schichtverbund auf Basis eines flächigen, elektrisch leitfähigen Fasermaterials A) und einer mikroporösen Lage (MPL) B) auf einer der Flächen des Fasermaterials A).

Die mikroporöse Lage B) enthält leitfähige Partikel in einer Matrix aus einem polymeren Bindemittel, wobei die mikroporöse Lage
B1) eine erste offenzellige Schicht auf wenigstens einer der Flächen des Fasermaterials A), und
B2) eine zweite gas- und wasserdurchlässige Schicht auf der ersten Schicht B1)
umfasst.

Bevorzugt enthält das polymere Bindemittel wenigstens ein Polymer, das ausgewählt ist unter fluorhaltigen Polymeren b1) fluorfreien, hochtemperaturbeständigen Polymeren b2) und Mischungen davon.

Das zur Herstellung der MPL eingesetzte polymere Bindemittel kann in den Schichten B1) und B2) die gleiche Zusammensetzung oder verschiedene Zusammensetzungen aufweisen. Dabei gelten die folgenden Angaben zu geeigneten und bevorzugten polymeren Bindemitteln und deren Einsatzmengen für beide Schichten B1) und B2) gleichermaßen.

In einer bevorzugten Ausführungsform enthält das polymere Bindemittel wenigstens fluorhaltiges Polymer b1). Das fluorhaltiges Polymer b1) ist vorzugsweise ausgewählt unter Polytetrafluorethylenen, Tetrafluorethylen-Hexafluorpropylen-Copolymeren, Perfluoralkoxy-Polymeren und Mischungen davon. Bevorzugt wird als Polymer b2) ein Polytetrafluorethylen eingesetzt.

In einer weiteren bevorzugten Ausführungsform enthält das polymere Bindemittel wenigstens ein fluorfreies, hochtemperaturbeständiges Polymer b2). Das fluorfreie, hochtemperaturbeständige Polymer b2) ist vorzugsweise ausgewählt ist unter Polyaryletherketonen, Polyphenylensulfiden, Polysulfonen, Polyethersulfonen, teilaromatischen (Co)polyamiden, Polyimiden, Polyamidimiden, Polyetherimiden und Mischungen davon.

Das Polymer b2) ist speziell ausgewählt unter sogenannten Hochleistungskunststoffen, die sich durch Eigenschaften, wie eine hohe Glasübergangstemperatur, eine hohe Schmelztemperatur, gute Temperaturbeständigkeit, gute Chemikalienbeständigkeit und gute mechanische Eigenschaften auszeichnen. Bevorzugt weisen die Polymere b1) eine dauerhafte Betriebstemperatur (Dauergebrauchstemperatur) von wenigstens 150°C auf. Insbesondere handelt es sich bei den Polymeren b2) um Thermoplaste.

Bevorzugt als Polymere b2) sind teilaromatische und aromatische Polymere.

Die Polymere b2) sind vorzugsweise ausgewählt unter Polyaryletherketonen (PAEK), Polyphenylensulfiden (PPS), Polysulfonen (PSU), Polyethersulfonen (PES), teilaromatischen (Co)polyamiden (Hochtemperaturpolyamiden, HTPA), Polyimiden (PI), Polyamidimiden (PAI), Polyetherimiden (PEI) und Mischungen (Blends) davon.

Geeignete Polymere b2) sind auch (teil)aromatische Polyester, wie PET oder PBT, Polycarbonate (PC) und temperaturbeständige Melamine, wie mit nanoporösen SiO₂-Aerogelen gefüllte Melaminschäume.

In einer bevorzugten Ausführung umfasst die Polymerkomponente b1) wenigstens ein Polyaryletherketon. Speziell besteht die Polmerkomponente b1) aus wenigstens einem Polyaryletherketon. Polyaryletherketone (PAEK) sind teilkristalline Thermoplaste, die einen alternierenden Aufbau aufweisen, bei dem auf eine Arylgruppe jeweils eine Ketogruppe (Carbonylgruppe) oder Ethergruppe folgt, wobei die Anteile an den Keto- und Ethergruppen variabel sind und sich im Substitutionsmuster an den Arylringen unterscheiden können. Geeignete Polyaryletherketone b1) sind Polyetherketone (PEK), Polyetheretherketone (PEEK), Polyetherketonketone (PEKK), etc. Bevorzugt umfasst die Polymerkomponente b2) wenigstens ein Polyetheretherketon oder besteht aus wenigstens einem Polyetheretherketon.

Geeignete teilaromatischen (Co)polyamiden b2) sind die als Hochtemperaturpolyamide (HTPA) bezeichneten Polymere. Dabei handelt es sich um teilkristalline oder amorphe, thermoplastische, teilaromatische Polyamide. Bevorzugt enthalten diese wenigstens eine aromatische Dicarbonsäure einpolymerisiert, insbesondere ausgewählt unter Terephthalsäure, Isophthalsäure und Gemischen aus Terephthalsäure und Isophthalsäure. Bevorzugte teilaromatische (Co)polyamide b2) sind ausgewählt unter PA 6.T, PA 10.T, PA 12.T, PA 6.I, PA 10.I, PA 12.I, PA 6.T/6.I, PA 6.T/6, PA 6.T/10T, PA 10.T/6.T, PA 6.T/12.T, PA12.T/6.T und Gemischen davon. Eine weitere spezielle Ausführungsform der Polyamide b2) ist Polyphthalamid (PPA).

Geeignete Polyimide b2) sind Polysuccinimid (PSI), Polybismaleinimid (PBMI), Polyimidsulfon (PISO) und Polymethacrylimid (PMI).

Insbesondere enthält das polymere Bindemittel wenigstens ein fluorhaltiges Polymer b1) und wenigstens ein davon verschiedenes fluorfreies, hochtemperaturbeständiges Polymer b2).

In einer bevorzugten Ausführungsform enthält das polymere Bindemittel wenigstens ein Polymer b1) und wenigstens ein Polymer b2), wobei b1) Polytetrafluorethylen (PTFE) umfasst oder daraus besteht ubd b2) ein Polyetheretherketon (PEEK) umfasst oder daraus besteht.

Gegebenenfalls enthält das polymere Bindemittel wenigstens ein weiteres, von den Polymeren b1) und b2) verschiedenes Polymer. Geeignet sind die zuvor genannten als polymere Additiv a13) des Fasermaterials A) eingesetzten Polymere.

Vorzugsweise wird zur Herstellung der mikroporösen Lage B) das polymere Bindemittel in einer Gewichtsmenge von 0,5 bis 50 Gew.-%, besonders bevorzugt von 1,0 bis 40 Gew.-%, insbesondere 10 bis 25 Gew.-%, bezogen auf des Gesamtgewicht des zur Herstellung der mikroporösen Lage B) eingesetzten Beschichtungsmittels eingesetzt. Das Gesamtgewicht des zur Herstellung der mikroporösen Lage B) eingesetzten Beschichtungsmittels ergibt sich aus der Summe der Gewichte der zur Herstellung der ersten und zweiten Beschichtung eingesetzten Beschichtungsmittel. Entsprechend ergibt sich die Gewichtsmenge des polymeren Bindemittels aus der Summe der Gewichte der im ersten und zweiten Beschichtungsmittel enthaltenen polymeren Bindemittel.

Vorzugsweise beträgt der Feststoffgehalt des ersten Beschichtungsmittels zur Herstellung der ersten Schicht B1) der mikroporösen Lage B) 1 bis 50 Gew.-%, besonders bevorzugt 2 bis 25 Gew.-%, insbesondere 4 bis 18 Gew.-%.

Vorzugsweise beträgt der Feststoffgehalt des zweiten Beschichtungsmittels zur Herstellung der zweiten Schicht B2) der mikroporösen Lage B) 1 bis 50 Gew.-%, besonders bevorzugt 2 bis 25 Gew.-%, insbesondere 4 bis 18 Gew.-%.

Bevorzugt weist das erste und das zweite Beschichtungsmittel wenigstens ein Lösungs- und Dispergiermittel auf, ausgewählt unter Wasser, wassermischbaren Flüssigkeiten und Mischungen davon. Bevorzugt wird als erstes und/oder zweites Lösungs- und Dispergiermittel Wasser eingesetzt.

Vorzugsweise wird zur Herstellung der ersten Schicht B1) der mikroporösen Lage B) das polymere Bindemittel in einer Gewichtsmenge von 0,2 bis 10 Gew.-%, besonders bevorzugt von 0,5 bis 5 Gew.-%, insbesondere 0,8 bis 4 Gew.-%, bezogen auf das Gewicht des zur Herstellung der ersten Schicht B1) eingesetzten ersten Beschichtungsmittels eingesetzt.

Vorzugsweise wird zur Herstellung der zweiten Schicht B2) der mikroporösen Lage B) das polymere Bindemittel in einer Gewichtsmenge von 0,2 bis 10 Gew.-%, besonders bevorzugt von 0,5 bis 5 Gew.-%, insbesondere 0,8 bis 4 Gew.-%, bezogen auf das Gewicht des zur Herstellung der zweiten Schicht B1) eingesetzten zweiten Beschichtungsmittels eingesetzt.

Bevorzugt liegt das Gewichtsmengenverhältnis von erstem Beschichtungsmittel zu zweitem Beschichtungsmittel in einem Bereich von 50,0 : 50,0 bis 95,0 : 5,0 besonders bevorzugt in einem Bereich von 60,0 : 40,0 bis 90,0 : 10,0.

Erfindungsgemäß umfasst die mikroporöse Lage B) leitfähige Partikel in einer Matrix aus einem polymeren Bindemittel. Die leitfähigen Partikel sind vorzugsweise ausgewählt unter Ruß, Graphit, Graphen, Kohlenstoffnanoröhren (CNT), Kohlenstoffnanofasern und Mischungen davon. Bevorzugt wird Ruß, Graphit oder eine Mischung davon eingesetzt. Wie im Folgenden näher ausgeführt wird, hat die kohlenstoffhaltige Komponente der MPL einen Einfluss auf die Poreneigenschaften und den Massentransport durch die Gasdiffusionslage. Ohne an eine Theorie gebunden zu sein, wird angenommen, dass der Einfluss der kohlenstoffhaltigen Komponente auf die Poreneigenschaften und den Massentransport unter Anderem auf sterischen Effekten beruht. Dies gilt speziell für den Einsatz von Ruß und Graphit. Diese Komponenten können dann sowohl die Funktion als leitfähiges Material erfüllen, wie auch gezielt zur Modifizierung der Poreneigenschaften und des Massentransports eingesetzt werden. Zur Erzielung größerer Poren wird jedoch in der Regel der Einsatz wenigstens eines davon verschiedenen Porenbildners erforderlich sein (im Folgenden auch als "weiterer Porenbildner" bezeichnet). Derartige Porenbildner, die sich bei Erhitzen auf eine Temperatur oberhalb der Porenbildungstemperatur unter Bildung einer Gasphase zersetzen oder die ein Gas freisetzen oder die zur Ausbildung von Poren durch Behandlung mit einem Lösungsmittel befähigt sind, werden im Folgenden näher beschrieben.

Bevorzugt beträgt die Gewichtsmenge an leitfähigen Partikeln 0,5 bis 45 Gew.-%, besonders bevorzugt 0,8 bis 40 Gew.-%, insbesondere 1,0 bis 20 Gew.-%, speziell 3,0 bis 15 Gew.-%, bezogen auf des Gesamtgewicht des zur Herstellung der mikroporösen Lage B) eingesetzten Beschichtungsmittels.

Bevorzugt beträgt die Gewichtsmenge an leitfähigen Partikeln in der ersten Schicht B1) 0,5 bis 45 Gew.-%, besonders bevorzugt 0,8 bis 40 Gew.-%, insbesondere 1,0 bis 20 Gew.-%, speziell 3,0 bis 15 Gew.-%, bezogen auf des Gewicht des zur Herstellung der ersten Schicht B1) eingesetzten ersten Beschichtungsmittels.

Bevorzugt beträgt die Gewichtsmenge an leitfähigen Partikeln in der zweiten Schicht B2) 0,5 bis 45 Gew.-%, besonders bevorzugt 0,8 bis 40 Gew.-%, insbesondere 1,0 bis 20 Gew.-%, speziell 3,0 bis 15 Gew.-%, bezogen auf des Gewicht des zur Herstellung der zweiten Schicht B1) eingesetzten zweiten Beschichtungsmittels.

Die zuvor angegebenen Gewichtsmengen an leitfähigen Partikeln in der MPL B) bzw. in den Schichten B1) und B2) dienen zur Verbesserung der Leitfähigkeit. Sollen die kohlenstoffhaltigen Komponenten auch zur Modifizierung der Porosität bzw. des Massentransports in der MPL B) bzw. in den Schichten B1) und B2) eingesetzt werden, so kann diese Menge gegebenenfalls erhöht werden.

Es wurde gefunden, dass sich der Einsatz von zwei unterschiedlichen Beschichtungsmitteln zur Erzeugung einer mehrlagigen MPL, wobei sich die Beschichtungsmittel in der Art und/oder der Menge des eingesetzten kohlenstoffhaltigen Materials und ggf. zusätzlicher Porenbildner unterscheiden, vorteilhaft auf die Porenstruktur der MPL auswirkt.

Die zur Einstellung der Eigenschaften der Schicht B1) und der Schicht B2) eingesetzten Komponenten sind vorzugsweise ausgewählt unter Ruß, Graphitpartikeln, expandiertem Graphit, davon verschiedenen Porenbildnern und Mischungen davon. Diese Komponenten werden auch als "porositätsmodifizierende Komponenten" bezeichnet. Der Begriff "porositätsmodifizierende Komponenten" bezeichnet dabei allgemein Komponenten, welche die Bildung und/oder die Eigenschaften der gebildeten Poren beeinflussen. Er erfasst somit auch Komponenten, wie Ruß, Graphitpartikel und expandierten Graphit, die primär zur Verbesserung der Leitfähigkeit und/oder zur Bildung einer geschlosseneren Oberfläche in der Schicht B2) eingesetzt werden.

Die von Ruß, Graphitpartikeln und expandiertem Graphit verschiedenen porositätsmodifizierenden Komponenten werden auch als "weitere Porenbildner" bezeichnet. Dabei handelt es sich speziell um Komponenten, die unter Porenbildung aus der mikroporösen Schicht entfernt werden können. Diese weiteren Porenbildner können auch als alleinige Porenbildner eingesetzt werden.

### Ruß

Der Begriff Ruß bezeichnet im Rahmen der Erfindung ein Material, dass im Wesentlichen aus feinen Kohlenstoffpartikeln besteht. Für den Einsatz in der mikroporösen Lage B), der ersten Schicht B1) und der zweiten Schicht B2) geeigneter Ruß weist vorzugsweise einen mittleren Teilchendurchmesser, bezogen auf die Primärpartikel (Nodule) von höchstens 1000 nm (1 µm), bevorzugt höchstens 500 nm, auf. Bevorzugt weist der erfindungsgemäß eingesetzte Ruß einen mittleren Teilchendurchmesser, bezogen auf die Primärpartikel, im Bereich von 10 bis 400 nm, besonders bevorzugt von 20 bis 300 nm, auf.

Der mittlere Teilchendurchmesser und die elektronenmikroskopische Oberfläche können nach der ASTM-Norm D-3849-87 (Standard Test Method for Carbon Black - Morphological Characterization of Carbon Black Using Electron Microscopy) bestimmt werden.

Der erfindungsgemäß eingesetzte Ruß weist vorzugsweise eine BET-Oberfläche von 10 bis 1500 m²/g, vorzugsweise 20 bis 600 m²/g, besonders bevorzugt 50 bis 500 m²/g, auf. Der Wert der BET-Oberfläche wird gemäß der ASTM-Norm D 6556-04 bestimmt.

Der erfindungsgemäß eingesetzte Ruß ist vorzugsweise ausgewählt unter Acetylenruß, Flammruß, Spaltruß, Channelruß, Plasmaruß, Gasruß, Ofenruß, Ketjenruß und Mischungen davon.

### Graphitpartikel

Grundsätzlich eignen sich für den Einsatz in der mikroporösen Lage B), der ersten Schicht B1) und der zweiten Schicht B2) Graphitpartikel unterschiedlicher Morphologie, wie schieferförmig, sphärisch, etc. Der Begriff "Graphitpartikel" im Sinne der Erfindung erfasst nicht expandierten Graphit.

Die Größenverteilung der erfindungsgemäß eingesetzten Graphitpartikel kann monomodal sein oder auch mehrere Maxima umfassen und beispielsweise bimodal oder polymodal sein.

Das Aspektverhältnis von Durchmesser zur Dicke (D/H) (d.h. von mittlerem Durchmesser in der Ebene größter Ausdehnung D zur Dicke H) der Graphitpartikel liegt bevorzugt in einem Bereich von 1 bis 3.

### expandierter Graphit

Expandierter Graphit und Verfahren zu seiner Herstellung sind dem Fachmann bekannt. Als Ausgangsmaterial kann natürlicher Graphit, wie flockenförmiger Graphit, dienen, der aus Schichten von wabenförmig angeordneten Kohlenstoffatomen besteht und in der Lage ist, Moleküle zwischen die Graphitschichten einzulagern (zu interkalieren). Durch die Einlagerung von Verbindungen wie Säuren, resultiert sogenannter Blähgraphit, der bei erhöhter Temperatur auf ein Vielfaches des ursprünglichen Volumens expandiert. Zur Herstellung von expandiertem Graphit wird häufig interkalierter Graphit eingesetzt, der durch Behandlung von Graphit mit einer starken Säure, bevorzugt konzentrierter Schwefelsäure, in Verbindung mit einem Oxidationsmittel oder durch Behandlung mit konzentrierter Salpetersäure erhalten wird.

Der erfindungsgemäß für den Einsatz in der mikroporösen Lage B), der ersten Schicht B1) und der zweiten Schicht B2) eingesetzte expandierte Graphit weist vorzugsweise ein Aspektverhältnis von mittlerem Durchmesser in der Ebene größter Ausdehnung D zur Dicke H (D/H) in einem Bereich von 10 bis 1000 auf.

### Weitere Porenbildner

In einer bevorzugten Ausführungsform wird zur Einstellung der Eigenschaften der Schicht B1) wenigstens ein Porenbildner eingesetzt, der von Ruß, Graphitpartikeln und expandiertem Graphit verschieden ist ("weiterer Porenbildner").

Bevorzugt wird zur Ausbildung der ersten mikroporösen Schicht B1) ein Porenbildner eingesetzt, der ausgewählt ist unter
- Porenbildnern, die sich bei Erhitzen auf eine Temperatur oberhalb der Porenbildungstemperatur unter Bildung einer Gasphase zersetzen oder die ein Gas freisetzen,
- Porenbildnern, die zur Ausbildung von Poren durch Behandlung mit einem Lösungsmittel befähigt sind,
- Mischungen davon.

Insbesondere sind die zur Ausbildung der ersten mikroporösen Schicht B1) eingesetzten Porenbildner, die sich bei Erhitzen auf eine Temperatur oberhalb der Porenbildungstemperatur unter Bildung einer Gasphase zersetzen oder die ein Gas freisetzen, ausgewählt unter
- α1: Kunststoffpartikeln, vorzugsweise ausgewählt unter Acryl-Homo- und Copolymeren, Polymethyl(meth)acrylaten, Acryl-modifizierten Polystyrolen, speziell Styrol-Methylmethacrylat-Copolymeren, Polyvinylidenchlorid, etc.
- α2: expandierbaren Mikrosphären, vorzugsweise expandierbaren Mikrosphären, umfassend eine thermoplastische Hülle und eine eingeschlossene gasbildende Komponente,
- α3: natürlichen Polymeren, vorzugsweise ausgewählt unter Agar, Alginaten, Gelatine oder Stärke,
- α4: gasfreisetzenden Verbindungen, vorzugsweise ausgewählt unter Alkali- und Ammoniumhydrogencarbonaten, Alkali- und Ammoniumcarbonaten, vorzugsweise Natriumhydrogencarbonat und/oder Ammoniumhydrogencarbonat, und Mischungen davon.

In einer speziellen Ausführungsform wird zur Ausbildung der ersten mikroporösen Schicht B1) wenigstens eine expandierbare Mikrosphäre als Porenbildner eingesetzt.

Geeignete expandierbare Mikrosphären können z. B. flüchtige physikalische Treibmittel, wie Kohlenwasserstoffe oder Halogenkohlenwasserstoffe, die in thermoplastische Hüllen eingekapselt sind, umfassen. Physikalische Treibmittel dienen dazu, um die expandierbaren Mikrosphären schäumbar zu machen. Die Hüllen der expandierbaren Mikrosphären umfassen vorzugsweise wenigstens einenThermoplasten. Die Hüllen der expandierbaren Mikrosphären sind vorzugsweise ausgewählt unter Acryl-Homo- und Copolymeren, Polymethyl(meth)acrylaten, Acryl-modifizierten Polystyrolen, speziell Styrol-Methylmethacrylat-Copolymeren, Polyvinylidenchlorid und Mischungen davon.

Expandierbare Mikrosphären, die für die Erfindung geeignet sind, haben bevorzugt eine mittlere Teilchengröße im Bereich von etwa 1 bis 300 µm, besonders bevorzugt 5 bis 250 µm.

Geeignete kommerziell erhältliche Mikrosphären sind die EXPANCEL-Marken der Firma Nouryon, NL.

Insbesondere sind die zur Ausbildung der ersten mikroporösen Schicht B1) eingesetzten Porenbildner, die durch Behandlung mit einem Lösungsmittel befähigt ist, Poren zu bilden, ausgewählt unter Kohlenhydraten, wie Zucker, Cellulose oder Cellulosederivaten, wie beispielsweise Methylcellulose. In einer bevorzugten Ausführung wird als Porenbildner wenigstens ein Zucker eingesetzt. Diese lassen sich vorzugsweise mit Wasser unter Porenbildung auswaschen.

Bevorzugt weist das zur Ausbildung der ersten mikroporösen Schicht B1) eingesetzte erste Beschichtungsmittel wenigstens einen weiteren Porenbildnern in einer Gesamtmenge von 0,01 bis 50 Gew.-%, besonders bevorzugt 0,1 bis 5 Gew.-%, bezogen auf das Gesamtgewicht des ersten Beschichtungsmittels, auf.

In einer ersten Ausführungsform weist das zur Ausbildung der ersten mikroporösen Schicht B1) eingesetzte erste Beschichtungsmittel als porositätsmodifizierende Komponenten Ruß, Graphitpartikel und weitere Porenbildner auf. Mit anderen Worten, wird dem ersten Beschichtungsmittel in dieser Ausführungsform darüber hinaus keine porositätsmodifizierende Komponente zugesetzt.

In einer zweiten Ausführungsform weist das zur Ausbildung der ersten mikroporösen Schicht B1) eingesetzte erste Beschichtungsmittel als porositätsmodifizierende Komponenten Ruß und Graphitpartikel auf. Mit anderen Worten, wird dem ersten Beschichtungsmittel in dieser Ausführungsform darüber hinaus keine porositätsmodifizierende Komponente zugesetzt.

Bevorzugt weist das zur Ausbildung der ersten mikroporösen Schicht B1) eingesetzte erste Beschichtungsmittel Ruß und Graphitpartikel in einem Gewichtsmengenverhältnis von 1 : 0,5 bis 1 : 10, besonders bevorzugt von 1 : 1 bis 1 : 6, auf. Dies gilt sowohl für die zuvor genannte erste Ausführungsform (porositätsmodifizierende Komponenten: Ruß, Graphitpartikel und weitere Porenbildner), als auch für die zuvor genannte zweite Ausführungsform (porositätsmodifizierende Komponenten: Ruß und Graphitpartikel).

In einer ersten Ausführungsform weist das zur Ausbildung der zweiten mikroporösen Schicht B2) eingesetzte zweite Beschichtungsmittel als porositätsmodifizierende Komponenten Ruß, und expandierten Graphit auf. Mit anderen Worten, wird dem zweiten Beschichtungsmittel in dieser Ausführungsform darüber hinaus keine porositätsmodifizierende Komponente zugesetzt.

In einer zweiten Ausführungsform weist das zur Ausbildung der zweiten mikroporösen Schicht B2) eingesetzte zweite Beschichtungsmittel als porositätsmodifizierende Komponente Ruß auf. Mit anderen Worten, wird dem zweiten Beschichtungsmittel in dieser Ausführungsform darüber hinaus keine porositätsmodifizierende Komponente zugesetzt.

Bevorzugt weist das zur Ausbildung der zweiten mikroporösen Schicht B2) eingesetzte zweite Beschichtungsmittel Ruß und expandierten Graphit in einem Gewichtsmengenverhältnis von 1 : 0 bis 1 : 10 auf.

In einer speziellen Ausführungsform ist das zweite Beschichtungsmittel zur Ausbildung der zweiten mikroporösen Schicht B2) frei von zugesetzten weiteren Porenbildnern. Das zweite Beschichtungsmittel zur Ausbildung der zweiten mikroporösen Schicht B2) ist insbesondere frei ist von zugesetzten Porenbildnern, die sich bei Erhitzen auf eine Temperatur oberhalb der Porenbildungstemperatur unter Bildung einer Gasphase zersetzen oder die ein Gas freisetzen und Porenbildnern, die zur Ausbildung von Poren durch Behandlung mit einem Lösungsmittel befähigt sind.

Es ist bevorzugt, dass das zweite Beschichtungsmittel zur Ausbildung der zweiten mikroporösen Schicht B2) völlig frei von Porenbildnern ist, die sich bei Erhitzen auf eine Temperatur oberhalb der Porenbildungstemperatur unter Bildung einer Gasphase zersetzen oder die ein Gas freisetzen und Porenbildnern, die zur Ausbildung von Poren durch Behandlung mit einem Lösungsmittel befähigt sind.Vorzugsweise enthält das zweite Beschichtungsmittel zur Ausbildung der zweiten mikroporösen Schicht B2) Porenbildner, die sich bei Erhitzen auf eine Temperatur oberhalb der Porenbildungstemperatur unter Bildung einer Gasphase zersetzen oder die ein Gas freisetzen und Porenbildnern, die zur Ausbildung von Poren durch Behandlung mit einem Lösungsmittel befähigt sind in einer Menge im Bereich von 0 bis 0,00005 Gew.-%, bezogen auf das Gesamtgewicht des zweiten Beschichtungsmittels, besonders bevorzugt von 0 bis 0,00001 Gew.-%, bezogen auf das Gesamtgewicht des zweiten Beschichtungsmittels, insbesondere von 0 Gew.-%, bezogen auf das Gesamtgewicht des zweiten Beschichtungsmittels.

Eine Strukturanalyse der MPL B) und der Schichten B1) und B2) kann, wie zuvor beschrieben, mittels computertomographischer Mikroskopie (µ-CT) oder Rasterelektronenmikroskopie (REM/SEM) erfolgen.

Bevorzugt weist die mikroporöse Lage B) eine Dicke, bestimmt durch Rasterelektronenmikroskopie, von 5 bis 100 µm (Mikrometer), bevorzugt 10 bis 50 µm (Mikrometer), auf. Diese Dicke bezieht sich auf den unkomprimierten Zustand der mikroporösen Lage B), d.h. vor dem Einbau der GDL in eine Brennstoffzelle.

Bevorzugt weist die Schicht B1) eine Dicke, bestimmt durch Rasterelektronenmikroskopie, von 5 bis 99 µm, bevorzugt 10 bis 49 µm, auf. Diese Dicke bezieht sich auf den unkomprimierten Zustand der Schicht B1), d. h. vor dem Einbau der GDL in eine Brennstoffzelle.

Bevorzugt weist die Schicht B2) eine Dicke, bestimmt mit Rasterelektronenspektroskopie, von 1 bis 20 µm, bevorzugt 1 bis 10 µm, auf. Diese Dicke bezieht sich auf den unkomprimierten Zustand der Schicht B2), d. h. vor dem Einbau der GDL in eine Brennstoffzelle.

Bevorzugt beträgt das Verhältnis der Dicke der Schicht B1) zur Dicke der Schicht B2) wenigstens 1,5 : 1, bevorzugt wenigstens 2,0 : 1.

Die erfindungsgemäße Gasdiffusionslage weist vorzugsweise eine Dicke (Gesamtdicke aus Fasermaterial A) und MPL B)), bestimmt nach der DIN 53855-1:1993-08, im Bereich von 50 bis 1000 µm, besonders bevorzugt von 75 bis 500 µm auf. Diese Dicke bezieht sich auf den unkomprimierten Zustand der GDL.

Die Bestimmung der flächenbezogenen Masse (auch als Flächengewicht bezeichnet) in g/m² kann nach EN 29073-1:1992 erfolgen.

### Porengrößen

Die Bestimmung der Porengrößenverteilung und Porosität der Gasdiffusionslage, d.h. des Komposits aus den Schichten A), B1) und B2) kann, wie zuvor beschrieben, mittels Kapillarfluss-Porometrie erfolgen.

Die Charakterisierung der Porengrößenverteilung und Porosität der Schichten B1) und B2) kann speziell mittels Computertomographischer Mikroskopie (µ-CT, X-ray micro computed tomographic microscopy) oder Rasterelektronenmikroskopie (scanning electron microscopy, SEM) erfolgen. Auf die Angaben unter der Überschrift "Messverfahren" wird diesbezüglich Bezug genommen.

Die Porengröße kann eine monomodale, bimodale oder polymodale Verteilungskurve aufweisen. Eine bimodale oder polymodale Verteilungskurve kann beispielsweise durch den Einsatz verschiedener porositätsmodifizierender Komponenten (z.B. einer Mischung aus Ruß und Graphitpartikel) erzielt werden.

Bevorzugt weist die Schicht B1) einen mittleren Porendurchmesser, bestimmt durch Computertomographische Mikroskopie (µ-CT) von 12,00 bis 100,00 µm, besonders bevorzugt 15,00 bis 80,00 µm,auf.

Bevorzugt weist die Schicht B2) einen mittleren Porendurchmesser, bestimmt durch Rasterelektronenmikroskopie (SEM) von 0,005 bis 10,00 µm, bevorzugt 0,010 bis 5,00 µm, insbesondere 0,5 bis 5,00 µm, auf.

### Herstellungsverfahren

Ein weiterer Gegenstand der Erfindung ist ein Verfahren zur Herstellung einer Gasdiffusionslage für eine Brennstoffzelle, umfassend
A) ein flächiges elektrisch leitfähiges Fasermaterial,
B) eine mikroporöse Lage, enthaltend leitfähige Partikel in einer Matrix aus einem polymeren Bindemittel, wobei die mikroporöse Lage
   B1) eine erste offenzellige Schicht auf wenigstens einer der Flächen des Fasermaterials A), und
   B2) eine zweite geschlossenzellige, gas- und wasserdurchlässige Schicht auf der ersten Schicht B1)
umfasst,
bei dem man
i) ein flächiges elektrisch leitfähiges Fasermaterial A) bereitstellt,
ii) das in Schritt i) bereitgestellte Fasermaterial mit einem ersten Beschichtungsmittel zur Ausbildung einer ersten mikroporösen Schicht beschichtet,
   wobei auf das Fasermaterial A) vor der Beschichtung in Schritt ii) ein Porenbildner aufgetragen wird und/oder das in Schritt ii) eingesetzte Beschichtungsmittel einen Porenbildner enthält,
iii) die in Schritt ii) erhaltene erste Beschichtung mit einem zweiten Beschichtungsmittel zur Ausbildung einer zweiten mikroporösen Schicht beschichtet,
iv) das in Schritt iii) erhaltene mit dem ersten und dem zweiten Beschichtungsmittel beschichtete Fasermaterial einer Behandlung zur Erzeugung von Poren aus dem Porenbildner unterzieht.

In Schritt i) des erfindungsgemäßen Verfahrens wird wenigstens ein Fasermaterial A) bereitstellt, wobei bezüglich geeigneter und bevorzugter Fasermaterialien auf die zuvor gemachten Ausführungen in vollem Umfang Bezug genommen wird. Die Fasermaterialien können vor dem Einsatz in Schritt ii) mit üblichen Bindemitteln und/oder Additiven ausgerüstet werden, wie dies ebenfalls zuvor beschrieben ist. Dazu können übliche Imprägnierungsverfahren zum Einsatz kommen. Das gegebenenfalls ausgerüstete Fasermaterial A) kann vor dem Einsatz in Schritt ii) einer thermischen Behandlung (Trocknung und/oder Sinterung) unterzogen werden.

Das in Schritt i) bereitgestellte Fasermaterial A) wird in Schritt ii) mit einem ersten Beschichtungsmittel zur Ausbildung einer ersten mikroporösen Schicht B1) beschichtet. Bevorzugt wird das Fasermaterial mit einer wässrigen Zusammensetzung beschichtet und/oder imprägniert, die wenigstens ein polymeres Bindemittel, leitfähige Partikel, wenigstens eine porenbildende Komponente und gegebenenfalls weitere Additive enthält. Dabei können bestimmte kohlenstoffhaltige Verbindungen, wie zuvor erwähnt, als leitfähige Partikel und als porositätsmodifizierende Komponente eingesetzt werden. In diesem Falle wird die Einsatzmenge so gewählt, dass beide Zwecke erfüllt werden. Es ist möglich, dass alle Komponenten zur Ausbildung der ersten mikroporösen Schicht B1) in einer einzigen Zusammensetzung zur Beschichtung des Fasermaterials A) eingesetzt werden. Es ist auch möglich, die Beschichtung des Fasermaterials A) mit zwei oder mehr Beschichtungsmitteln durchzuführen, die jeweils eine oder mehrere Komponenten enthalten. Bezüglich geeigneter und bevorzugter polymerer Bindemittel, leitfähiger Partikel und porositätsmodifizierender Komponenten wird auf die zuvor gemachten Ausführungen in vollem Umfang Bezug genommen.

Das mit dem ersten Beschichtungsmittel beschichtete Fasermaterial A) kann vor dem Auftrag des zweiten Beschichtungsmittel einer Trocknung unterzogen werden. Die Trocknung kann bei erhöhter Temperatur und/oder verringertem Druck erfolgen. Wird zur Ausbildung der ersten mikroporösen Schicht ein Porenbildner eingesetzt wird, der sich bei Erhitzen auf eine Temperatur oberhalb der Porenbildungstemperatur unter Bildung einer Gasphase zersetzt oder der ein Gas freisetzt, so wird die Trocknung bei einer Temperatur unterhalb der Porenbildungstemperatur durchgeführt. In einer speziellen Ausführungsform wird das mit dem ersten Beschichtungsmittel beschichtete Fasermaterial A) vor dem Auftrag des zweiten Beschichtungsmittel keiner Trocknung unterzogen.

Das in Schritt ii) erhaltene, mit dem ersten Beschichtungsmittel zur Ausbildung der ersten mikroporösen Schicht B1) beschichtete Fasermaterial A) wird in Schritt iii) mit einem zweiten Beschichtungsmittel zur Ausbildung einer zweiten mikroporösen Schicht beschichtet. Bevorzugt wird zur Beschichtung eine wässrige Zusammensetzung eingesetzt, die wenigstens ein polymeres Bindemittel, leitfähige Partikel, wenigstens eine porositätsmodifizierende Komponente und gegebenenfalls weitere Additive enthält. Dabei können wiederum bestimmte kohlenstoffhaltige Verbindungen, wie zuvor erwähnt, als leitfähige Partikel und als porositätsmodifizierende Komponente eingesetzt werden. Es ist möglich, dass alle Komponenten zur Ausbildung der zweiten mikroporösen Schicht B2) in einer einzigen Beschichtungszusammensetzung eingesetzt werden. Es ist auch möglich, die Beschichtung zur Ausbildung der zweiten mikroporösen Schicht mit zwei oder mehr Beschichtungsmitteln durchzuführen, die jeweils eine oder mehrere Komponenten enthalten. Bezüglich geeigneter und bevorzugter polymerer Bindemittel, leitfähiger Partikel und porositätsmodifizierender Komponenten wird auf die zuvor gemachten Ausführungen in vollem Umfang Bezug genommen.

In Schritt iv) wird das in Schritt iii) erhaltene mit dem ersten und dem zweiten Beschichtungsmittel beschichtete Fasermaterial einer Behandlung zur Erzeugung von Poren aus dem Porenbildner unterzogen.

Wird zur Ausbildung der mikroporösen Schichten wenigstens ein Porenbildner eingesetzt, der sich bei Erhitzen auf eine Temperatur oberhalb der Porenbildungstemperatur unter Bildung einer Gasphase zersetzt oder der ein Gas freisetzt, umfasst die Behandlung zur Erzeugung von Poren in Schritt iv) das Erhitzen auf eine Temperatur oberhalb der Porenbildungstemperatur. Im Allgemeinen wird das beschichtete Fasermaterial dazu auf eine Temperatur im Bereich von 100 bis 600°C, bevorzugt 150 bis 500°C erhitzt. Die Dauer des Erhitzens beträgt vorzugsweise 1 bis 180 Minuten, bevorzugt 2 bis 120 Minuten.

Wird zur Ausbildung der mikroporösen Schichten ein Porenbildner eingesetzt, der zur Ausbildung von Poren durch Behandlung mit einem Lösungsmittel befähigt ist, umfasst die Behandlung zur Erzeugung von Poren in Schritt iv) das Eluieren des Porenbildners umfasst. Ein bevorzugtes Lösungsmittel ist Wasser. Abschließend erfolgt eine thermische Behandlung, z. B. in einem Trocknungs- und Sinterofen. Dabei kann beispielsweise zunächst eine Trocknung bei einer Temperatur von 100 bis 200°C und anschließend eine Sinterung bei einer Temperatur von 300 bis 500°C erfolgen.

Das Auftragen der MPL-Schichten in den Schritten ii) und iii) kann auf verschiedene Arten erfolgen. Während in einer diskontinuierlichen Herstellung häufig Sprüh-, Siebdruck- oder Meyer-Rod-Verfahren eingesetzt werden, kommen bei der kontinuierlichen Beschichtung bevorzugt Rakel-, Schlitzdüsen- und Gravurwalzenprozesse zum Einsatz. Dabei können die MPL-Schichtdicke und die Eindringtiefe durch die Beschichtungsprozessparameter sowie die Viskosität der Beschichtung beeinflusst werden.

### Eigenschaften

Die mikroporöse Lage und/oder die Gasdiffusionslage weisen in der Regel vorteilhafte Eigenschaften bezüglich der folgenden Parameter auf:
- Porenstruktur der MPL: insbesondere weist die innenliegende MPL-Schicht einen hohen Anteil an größeren, offenzelligen Poren auf.
- Die Oberfläche der MPL ist im Wesentlichen geschlossen ermöglicht einen guten elektrischen Kontakt mit der Katalysatorschicht.
- Die erfindungsgemäße MPL ermöglicht einen sehr hohen Massentransport von Gasen und Flüssigkeiten durch die Gasdiffusionslage, d.h. zwischen den Bipolarplatten einerseits und der Membran und den Katalysatorschichten (der CCM) andererseits.

Die vorteilhaften Eigenschaften bzgl. Porosität und Massentransport zeigen sich z.B. bei folgenden Parametern: Gurley-Gaspermeabilität, Trockendiffusionslänge, Blasenpunkt und größter Durchgangspore (bubble point).

### Brennstoffzelle

Ein weiterer Gegenstand der Erfindung ist eine Brennstoffzelle, umfassend wenigstens eine Gasdiffusionslage, wie zuvor definiert, oder erhältlich durch ein Verfahren, wie zuvor definiert.

Prinzipiell eignet sich die erfindungsgemäße Gasdiffusionslage für alle üblichen Brennstoffzelltypen. Bevorzugt handelt es sich bei der erfindungsgemäßen Brennstoffzelle um eine Protonenaustauschmembran-Brennstoffzelle (englisch: proton exchange membrane fuel cell, PEMFC). Protonenaustauschmembran-Brennstoffzellen werden auch als Polymerelektrolytbrennstoffzelle (englisch: polymer electrolyte fuel cell, PEFC) bezeichnet. Auf die zuvor gemachten Ausführungen zum Aufbau von Brennstoffzellen wird in vollem Umfang Bezug genommen.

Die erfindungsgemäßen Brennstoffzellen umfassen vorzugsweise eine Polymer-Elektrolyt-Membran, auf die auf der Anoden- und Kathodenseite eine Katalysatorschicht aufgebracht ist, die die Elektroden ausbildet. Bevorzugt befindet sich auf der Anoden- und/oder Kathodenseite eine Gasdiffusionslage (GDL) in Kontakt mit der Katalysatorschicht. Die Brennstoffzellen weisen speziell eine Polymer-Elektrolyt-Membran auf, auf die eine Katalysatorschicht aufgebracht ist, die mit der Oberfläche der mikroporösen Lage B) einer erfindungsgemäßen Gasdiffusionslage in Kontakt ist. Speziell weisen die Brennstoffzellen auf der Kathodenseite eine erfindungsgemäße Gasdiffusionslage auf, wobei die Katalysatorschicht mit der Oberfläche der mikroporösen Lage B) der Gasdiffusionslage in Kontakt ist. Spezieller weisen die Brennstoffzellen auf der Kathodenseite und auf der Anodenseite eine erfindungsgemäße Gasdiffusionslage auf, wobei sowohl die Kathodenschicht als auch die Anodenschicht jeweils mit der Oberfläche der mikroporösen Lage B) einer erfindungsgemäßen Gasdiffusionslage in Kontakt ist.

In einer Ausführungsform kann das Kathodenmaterial wenigstens ein hygroskopisches Material enthalten, um ein Austrocknen der Kathode zu vermeiden. Diese können dazu dienen, dass die Kathode mehr Wasser zurückhalten kann und somit der Elektrodenwiderstand verringert wird. Bevorzugt wird als hygroskopisches Material wenigstens eine Heteropolysäure eingesetzt, wie Zirkonium-phosphat (ZrP) und Zirkonium-Festphasenpartikel (ZrSPP), oder Oxide, wie ZrO₂, TiO₂ und SiO₂.

Es ist ein Vorteil der Erfindung, dass die Gasdiffusionslage gezielt an die baulichen Gegebenheiten der Brennstoffzelle, der durch diese strömenden Betriebsmedien und/oder die Betriebsparameter der Brennstoffzelle angepasst werden kann.

Ein weiterer Gegenstand der Erfindung ist die Verwendung einer Gasdiffusionslage, wie zuvor definiert, oder erhältlich durch ein Verfahren, wie zuvor definiert, in einer Protonenaustauschmembran-Brennstoffzelle.

### FIGURENBESCHREIBUNG

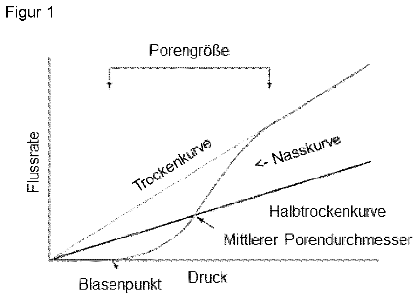

Figur 1 zeigt zur Veranschaulichung die Darstellung der Messwerte einer Kapillarfluss-Porometrie mit Nasskurve, Trockenkurve und Halbtrockenkurve sowie dem Blasenpunkt, dem mittleren Porendurchmesser und dem kleinsten Porendurchmesser (smallest pore).

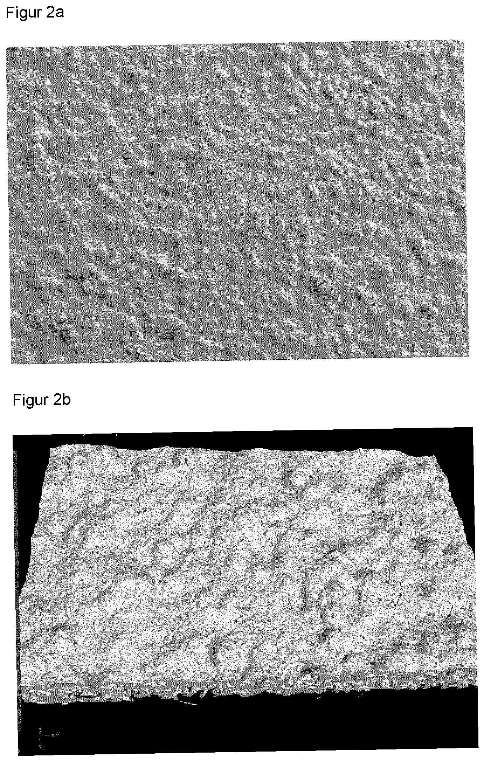

Figur 2a zeigt eine rasterelektronenmikroskopische Aufnahme der Draufsicht auf die Oberfläche einer erfindungsgemäßen Gasdiffusionslage mit Rußdeckschicht B2) auf einer darunter liegenden offenzelligen Schicht B1), die durch Einsatz eines kugelförmigen Porenbildners erhalten wurde.
Figur 2b zeigt eine µ-CT-Aufnahme (3D-Ansicht, schräge Draufsicht) der Gasdiffusionslage aus Figur 2a.

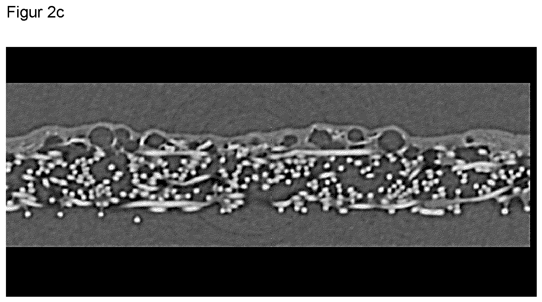

Figur 2c zeigt eine µ-CT-Aufnahme (Querschnitt) der Gasdiffusionslage aus Figur 2a.

### MESSVERFAHREN

### Kapillarfluss-Porometrie (capillary flow porometry, CFP)

Die Charakterisierung der für die Materialtransporteigenschaften der Gasdiffusionslagen relevanten Durchgangsporen (through pores) erfolgt mittels Kapillarfluss-Porometrie, zum Teil auch nur als "Porometrie" bezeichnet. Die Kapillarfluss-Porometrie-Messung ist in der DIN 66140:2022-02 bzw. der ASTM F-316.2003 beschrieben. Kapillarflussporometrie-Messungen bestehen aus zwei Schritten. Im ersten Schritt wird die GDL mit einer möglichst ideal benetzenden Flüssigkeit (Kontaktwinkel nahe 0°C) getränkt, so dass alle zugänglichen Poren vollständig mit der Flüssigkeit gefüllt sind. Die Probe wird anschließend in ein Porometrie-Messgerät eingebracht und einem stetig ansteigenden Druck auf der Anströmseite ausgesetzt.

Anfänglich sind alle Poren durch das Benetzungsmedium gefüllt und es kommt kein Fluss durch das Material zustande. Mit steigendem Druck kommt erfolgt eine Extrusion der Flüssigkeit aus den Poren. Dabei werden zuerst die größten Poren befreit. Der Blasenpunkt (bubble point, auch first bubble point oder FBP genannt) bezeichnet den Druck, bei dem der erste Gasstrom auftritt. Er ist ein Maß für die Größe der größten Durchgangspore. Der Gasstrom durch die Probe nimmt dabei mit steigendem Druck zu, da mehr und mehr kleinere Poren frei werden. Sind alle Poren frei, kommt es zu einem quasi-linearen Anstieg des Gasflusses in Abhängigkeit vom angelegten Druck. Die so erhaltene Kurve nennt man "Nasskurve" (wet curve).

Der zweite Messschritt erfolgt, ohne dass die Poren durch eine Benetzungsflüssigkeit befüllt sind. So wird eine "Trockenkurve" (dry curve) erhalten, die sich mit dem quasi-linearen Teil der Nasskurve vereinigt. Die "Halbtrockenkurve" (half-dry curve) wird berechnet, indem die Werte für die Durchflussrate in Bezug auf den angelegten Druck durch 2 geteilt werden. Am Schnittpunkt der Nasskurve und der Trockenkurve befindet sich der kleinste Porendurchmesser (smallest pore). Am Schnittpunkt der Nasskurve und der Halbtrockenkurve befindet sich der mittlere Porendurchmesser (mean flow pore size). Unter Anwendung der Young-Laplace-Gleichung P = 4 × γ × cos(θ) / D mit P = Druck, γ = Oberflächenspannung, θ = Kontaktwinkel und D = Porendurchmesser erhält man in Abhängigkeit vom angelegten Druck und basierend auf der Oberflächenspannung der Benetzungsflüssigkeit die Porengrößenverteilung. Bei der Verwendung von Standard-Benetzungsflüssigkeiten (z.B. perfluorierte Kohlenwasserstoffe oder Ether mit Oberflächenspannungen im Bereich von etwa 15 bis 25 dyn/cm) und Drücken bis zu 35 bar können Porengrößen bis zu einem Minimum von ca. 15 nm erfasst werden.

Im Folgenden wurde jede Messung dreimal wiederholt und der Mittelwert bestimmt. Als Benetzungsflüssigkeit wurde Porefil mit einer Oberflächenspannung von 26 dyn/cm und als Gas Luft verwendet. Die Messung erfolgte bei Raumtemperatur. Als Messgerät wurde ein Porometer POROLUX ^{®} 500 verwendet. Die Probenfläche betrug 298,6 mm². Der Enddruck der drei Messungen betrug 1 bar, 1 bar und 1,5 bar (jeweils Überdruck). Messpunkte Nassmessung: 200, Messpunkte Trockenmessung: 100, Druckanstieg: 120 s/bar.

### Computertomographische Mikroskopie

Die Charakterisierung der Struktur der erfindungsgemäßen Gasdiffusionslagen kann mittels Computertomographischer Mikroskopie (µ-CT, X-ray micro computed tomographic microscopy) erfolgen. Ein solches Verfahren wird von Odaya et al. in X-ray Tomographic Analysis of Porosity Distributions in Gas Diffusion Layers of Proton Exchange Membrane Fuel Cells, Electrochimica Acta, Volume 152, 10. Januar 2015, Seiten 464-472 (https://doi.org/10.1016/j.electacta.2014.11.143) beschrieben. Mit diesem Verfahren gelingt auch die Bestimmung der mittleren Porendurchmesser der MPL und der Schichten B1) und B2).

### Rasterelektronenmikroskopie

Die Charakterisierung der Struktur der erfindungsgemäßen Gasdiffusionslagen kann auch mittels Rasterelektronenmikroskopie (scanning electron microscopy, SEM) erfolgen. Ein solches Verfahren wird von Farmer et al. in Assessing porosity of proton exchange membrane fuel cell gas diffusion layers by scanning electron microscope image analysis, Journal of Power Sources 197 (2012) 1-11, (doi:10.1016/j.jpowsour.2011.08.064) beschrieben. Mit diesem Verfahren gelingt speziell auch die Bestimmung der mittleren Porendurchmesser der Schicht B2).

Porositätswerte, die mit verschiedenen Messverfahren ermittelt wurden, sind nicht unmittelbar vergleichbar. Die verwendeten Methoden erfassen unterschiedliche Aspekte der Porosität, wie das Verhalten bei der Befüllung oder Durchströmung des Materials mit verschiedenen Flüssigkeiten und Gasen oder die Bestimmung der Materialstruktur mit einem bildgebenden Verfahren. Desweiteren lassen sich auch nur solche Werte vergleichen, die an Proben mit vergleichbarem Schichtaufbau ermittelt wurden (z.B. auf Basis des Fasermaterials A) und nur der ersten mikroporösen Lage B1) oder auf Basis des Fasermaterials A), der ersten mikroporösen Lage B1) und der zweiten mikroporösen Lage B2).

### Flächenbezogene Masse

Die Bestimmung der flächenbezogenen Masse in g/m² erfolgte nach ISO 9073-1.

### Dicke des leitfähigen flächigen Fasermaterials und der Gasdiffusionslage

Die Bestimmung der Dicke des leitfähigen flächigen Fasermaterials und der Gasdiffusionslage erfolgte nach der DIN 53855-1:1993-08 "Bestimmung der Dicke textiler Flächengebilde" erfolgen. Die Bestimmung der Dicke bei einer bestimmten Druckkraft (z.B. wie in den folgenden Versuchen bei 0,025 MPa oder bei 6,0 MPa) ist ebenfalls in der DIN beschrieben.

### Gurley-Gaspermeabilität

Die Gurley-Gaspermeabilität wurde jeweils senkrecht zur Materialebene mit einem Gurley-Densometer der Firma Gurley Precision Instruments gemäß ISO 5636-5 bestimmt. Bei der Messung wird die Zeit in Sekunden ermittelt, bis 100 cm³ Luft bei konstanter Druckdifferenz senkrecht durch die GDL-Probe mit einer durchströmten Probenfläche von 6,42 cm² geströmt sind.

### Trockendiffusionslänge

Die Trockendiffusionslänge wurde mit Hilfe einer stationären Wicke-Kallenbach-Zelle bestimmt. Die trockene Diffusionslänge bezeichnet die tatsächliche Länge der Strecke, die ein Gasmolekül durch das flächige Fasermaterial a) die mikroporöse Lage b) in µm zurücklegt.

### Rauheit

Die Bestimmung der Rauheit erfolgte nach dem Tastschnittverfahren wie es in der DIN 4768-1:1974-08 beschrieben ist.

Bestimmt wurde der Mittenrauwert Rₐ (mittlerer Abstand eines Messpunktes auf der Oberfläche zur Mittellinie) und die gemittelte Rautiefe R_{z}. Die Messungen wurde mit einem Mahr-Messgerät Mahrsurf XCR20 mit Freitaster MFW-250 durchgeführt. Die Werte sind jeweils Durchschnittswerte aus 6 Bestimmungen: 3 in Maschinenrichtung (MD) und 3 senkrecht zur Maschinenrichtung (CD).

Für die Messung wurden folgende Bedingungen gewählt:
Taster = MFW-250. Tast- Diamantradius 2µm, Kegelwinkel 60°
LC (GS) = 2,5mm = Cut Off = LT+LM
LT = 17,5mm = Taststrecke = 2,5 mm Vorlauf und 2,5 mm Nachlauf zum Ein- / Ausschwingen des Gaus-Filters. Diese 2 x 2,5 mm Weg werden in der Messung nicht berücksichtigt.
LM = 12,5mm = Messstrecke, welche zur Ermittlung des Rauheitswerts führt
Z =5 = Anzahl der Einzelmessungen für Rz-Wert. Messweg (Profil) wird hierbei in 5 symmetrische Einzelstrecken zerlegt (= LM / 5). Aus jeder Einzelstrecke wird der Mittelwert errechnet. Aus den 5 Mittelwerten wird der Rz- Wert gemittelt.
VB = +-250µm = Messbereich des Tasters
Profilauflösung pro Messstrecke = 100.000 Schritte
Linearität =< 1%
Tastkraft (Messkraft) = 0,8 mN
Tastgeschwindigkeit 0,5 mm / Sek.

### BEVORZUGTE AUSFÜHRUNGSFORMEN DER ERFINDUNG

1. Gasdiffusionslage für eine Brennstoffzelle, umfassend
   A) ein flächiges elektrisch leitfähiges Fasermaterial,
   B) eine mikroporöse Lage, enthaltend leitfähige Partikel in einer Matrix aus einem polymeren Bindemittel, wobei die mikroporöse Lage
      B1) eine erste offenzellige Schicht auf wenigstens einer der Flächen des Fasermaterials A), und
      B2) eine zweite gas- und wasserdurchlässige Schicht auf der ersten Schicht B1), die einen geringeren Porendurchmesser aufweist als die Schicht B1),
   umfasst,
   erhältlich durch ein Verfahren, bei dem man
   i) ein flächiges elektrisch leitfähiges Fasermaterial A) bereitstellt,
   ii) das in Schritt i) bereitgestellte Fasermaterial mit einem ersten Beschichtungsmittel zur Ausbildung einer ersten mikroporösen Schicht beschichtet,
      wobei auf das Fasermaterial A) vor der Beschichtung in Schritt ii) ein Porenbildner aufgetragen wird und/oder das in Schritt ii) eingesetzte Beschichtungsmittel einen Porenbildner enthält,
   iii) die in Schritt ii) erhaltene erste Beschichtung mit einem zweiten Beschichtungsmittel zur Ausbildung einer zweiten mikroporösen Schicht beschichtet,
   iv) das in Schritt iii) erhaltene mit dem ersten und dem zweiten Beschichtungsmittel beschichtete Fasermaterial einer Behandlung zur Erzeugung von Poren aus dem Porenbildner unterzieht.
2. Gasdiffusionslage für eine Brennstoffzelle, umfassend
   A) ein flächiges elektrisch leitfähiges Fasermaterial,
   B) eine mikroporöse Lage, enthaltend leitfähige Partikel in einer Matrix aus einem polymeren Bindemittel, wobei die mikroporöse Lage
      B1) eine erste offenzellige Schicht auf wenigstens einer der Flächen des Fasermaterials A) und
      B2) eine zweite gas- und wasserdurchlässige Schicht auf der ersten Schicht B1)
   umfasst,
   wobei die Größe der größten Durchgangspore der Gasdiffusionslage, bezogen auf das flächige elektrisch leitfähige Fasermaterial A) und die erste Schicht B1), bestimmt durch Kapillarfluss-Porometrie-Messung nach der ASTM F-316:2003 wenigstens 30,00 µm beträgt und
   wobei der mittlere Porendurchmesser der Gasdiffusionslage, bezogen auf das flächige elektrisch leitfähige Fasermaterial A), die erste Schicht B1) und die zweite Schicht B2), bestimmt durch Kapillarfluss-Porometrie-Messung nach der ASTM F-316:2003 höchstens 8,00 µm beträgt.
3. Gasdiffusionslage nach Ausführungsform 1 oder 2, wobei zur Ausbildung der ersten mikroporösen Schicht B1) ein Porenbildner eingesetzt wird, der ausgewählt ist unter
   - α: Porenbildnern, die sich bei Erhitzen auf eine Temperatur oberhalb der Porenbildungstemperatur unter Bildung einer Gasphase zersetzen oder die ein Gas freisetzen, vorzugsweise ausgewählt unter
   α 1 Kunststoffpartikeln, vorzugsweise ausgewählt unter Acryl-Homo- und Copolymeren, Polymethyl(meth)acrylaten, Acryl-modifizierten Polystyrolen, speziell Styrol-Methylmethacrylat-Copolymeren, Polyvinylidenchlorid, etc.
   α 2 expandierbaren Mikrosphären, vorzugsweise expandierbaren Mikrosphären, umfassend eine thermoplastische Hülle und eine eingeschlossene gasbildende Komponente,
   α 3 natürlichen Polymeren, vorzugsweise ausgewählt unter Agar, Alginaten, Gelatine oder Stärke,
   α 4 gasfreisetzenden Verbindungen, vorzugsweise ausgewählt unter Alkali- und Ammoniumhydrogencarbonaten, Alkali- und Ammoniumcarbonaten, vorzugsweise Natriumhydrogencarbonat und/oder Ammoniumhydrogencarbonat,
   - β: Porenbildnern, die zur Ausbildung von Poren durch Behandlung mit einem Lösungsmittel befähigt sind, vorzugsweise ausgewählt unter Zuckern,
   - γ: Mischungen davon.
4. Gasdiffusionslage nach einer der Ausführungsformen 1 oder 3, wobei
   zur Ausbildung der ersten mikroporösen Schicht B1) ein Porenbildner eingesetzt wird, der sich bei Erhitzen auf eine Temperatur oberhalb der Porenbildungstemperatur unter Bildung einer Gasphase zersetzt oder der ein Gas freisetzt und die Behandlung zur Erzeugung von Poren in Schritt iv) das Erhitzen auf eine Temperatur oberhalb der Porenbildungstemperatur umfasst,
      oder
   zur Ausbildung der ersten mikroporösen Schicht B1) ein Porenbildner eingesetzt wird, der zur Ausbildung von Poren durch Behandlung mit einem Lösungsmittel befähigt ist und die Behandlung zur Erzeugung von Poren in Schritt iv) das Eluieren des Porenbildners umfasst.
5. Gasdiffusionslage nach einer der vorhergenden Ausführungsformen, wobei das zweite Beschichtungsmittel zur Ausbildung der zweiten mikroporösen Schicht B2) frei ist von zugesetzten Porenbildnern, insbesondere frei ist von Porenbildnern, die sich bei Erhitzen auf eine Temperatur oberhalb der Porenbildungstemperatur unter Bildung einer Gasphase zersetzen oder die ein Gas freisetzen und Porenbildnern, die zur Ausbildung von Poren durch Behandlung mit einem Lösungsmittel befähigt sind.
6. Gasdiffusionslage nach einer der vorhergenden Ausführungsformen, wobei das Fasermaterial A) ausgewählt ist unter Kohlefaser-Vliesstoffen, Kohlefaser-Geweben, Kohlefaser-Papieren und Kombinationen davon.
7. Gasdiffusionslage nach einer der vorhergenden Ausführungsformen, wobei der mittlere Porendurchmesser der Schicht B1), bestimmt durch Computertomographische Mikroskopie (µ-CT), wenigstens 50%, bevorzugt wenigstens 90%, der Dicke der Schicht B1), bestimmt durch Computertomographische Mikroskopie, beträgt.
8. Gasdiffusionslage nach einer der vorhergenden Ausführungsformen, wobei der mittlere Porendurchmesser der Schicht B1), bestimmt durch Computertomographische Mikroskopie (µ-CT), 12,00 bis 100,00 µm, bevorzugt 15,00 bis 80,00 µm, beträgt.
9. Gasdiffusionslage nach einer der vorhergenden Ausführungsformen, wobei der mittlere Porendurchmesser der Schicht B2), bestimmt durch Rasterelektronenmikroskopie (SEM), 0,005 bis 10,00 µm, bevorzugt 0,010 bis 5,00 µm, beträgt.
10. Gasdiffusionslage nach einer der vorhergenden Ausführungsformen, wobei zur Ausbildung der ersten mikroporösen Schicht B1) ein erstes Beschichtungsmittel eingesetzt wird, das porositätsmodifizierende Komponenten enthält, ausgewählt unter Ruß, Graphitpartikeln und Mischungen davon.
11. Gasdiffusionslage nach einer der vorhergenden Ausführungsformen, wobei zur Ausbildung der ersten mikroporösen Schicht B1) ein erstes Beschichtungsmittel eingesetzt wird, das eine Mischung aus Ruß und Graphitpartikeln enthält, vorzugsweise in einem Gewichtsmengenverhältnis von Ruß zu Graphitpartikeln in einem Bereich von 1 : 0,5 bis 1 : 10, besonders bevorzugt von 1 : 1 bis 1 : 6.
12. Gasdiffusionslage nach einer der vorhergenden Ausführungsformen, wobei zur Ausbildung der zweiten mikroporösen Schicht B2) ein zweites Beschichtungsmittel eingesetzt wird, das porositätsmodifizierende Komponenten enthält, ausgewählt unter Ruß, expandiertem Graphit und Mischungen davon.
13. Gasdiffusionslage nach einer der vorhergenden Ausführungsformen, wobei zur Ausbildung der zweiten mikroporösen Schicht B1) ein zweites Beschichtungsmittel eingesetzt wird, das als porositätsmodifizierende Komponenten ein Kohlenstoffmaterial enthält, das ausschließlich aus Ruß besteht oder das eine Mischung aus Ruß und expandierten Graphitpartikeln enthält.
14. Gasdiffusionslage nach einer der vorhergenden Ausführungsformen, wobei zur Ausbildung der zweiten mikroporösen Schicht B2) ein zweites Beschichtungsmittel eingesetzt wird, das Ruß und expandierten Graphit in einem Gewichtsmengenverhältnis von 1 : 0 bis 1 : 10, enthält.
15. Verfahren zur Herstellung einer Gasdiffusionslage für eine Brennstoffzelle, umfassend
   A) ein flächiges elektrisch leitfähiges Fasermaterial,
   B) eine mikroporöse Lage, enthaltend leitfähige Partikel in einer Matrix aus einem polymeren Bindemittel, wobei die mikroporöse Lage
      B1) eine erste offenzellige Schicht auf wenigstens einer der Flächen des Fasermaterials A), und
      B2) eine zweite gas- und wasserdurchlässige Schicht auf der ersten Schicht B1)
   umfasst,
   bei dem man
   i) ein flächiges elektrisch leitfähiges Fasermaterial A) bereitstellt,
   ii) das in Schritt i) bereitgestellte Fasermaterial mit einem ersten Beschichtungsmittel zur Ausbildung einer ersten mikroporösen Schicht beschichtet,
      wobei auf das Fasermaterial A) vor der Beschichtung in Schritt ii) ein Porenbildner aufgetragen wird und/oder das in Schritt ii) eingesetzte Beschichtungsmittel einen Porenbildner enthält,
   iii) die in Schritt ii) erhaltene erste Beschichtung mit einem zweiten Beschichtungsmittel zur Ausbildung einer zweiten mikroporösen Schicht beschichtet,
   iv) das in Schritt iii) erhaltene mit dem ersten und dem zweiten Beschichtungsmittel beschichtete Fasermaterial einer Behandlung zur Erzeugung von Poren aus dem Porenbildner unterzieht.
16. Brennstoffzelle, umfassend wenigstens eine Gasdiffusionslage, wie in einer der Ausführungsformen 1 bis 14 definiert, oder erhältlich durch ein Verfahren, wie in Ausführungsform 15 definiert.
17. Brennstoffzelle nach Ausführungsform 16, umfassend eine Polymer-Elektrolyt-Membran, auf die eine Katalysatorschicht aufgebracht ist, wobei die Katalysatorschicht mit der Oberfläche der zweiten mikroporösen Lage B2) der Gasdiffusionslage in Kontakt ist.
18. Brennstoffzellstapel, umfassend eine Vielzahl von Brennstoffzellen, wie in einer der Ausführungsformen 16 oder 17 definiert.
19. Verwendung einer Gasdiffusionslage wie in einer der Ausführungsformen 1 bis 14 definiert, oder erhältlich durch ein Verfahren, wie in Ausführungsform 15 definiert, in einer Brennstoffzelle zur Verbesserung der Gas- und/oder Wasserdurchlässigkeit.

Die Erfindung wird anhand der folgenden, nicht einschränkend zu verstehenden Beispiele erläutert.

### BEISPIELE

### I) Herstellung von Gasdiffusionslagen

Bei der Herstellung der Gasdiffusionslagen wurden die folgenden Komponenten zur Einstellung der Eigenschaften der Poren bzw. der Gas- und Wasserdurchlässigkeit eingesetzt:

### Ruß

Es wurde ein kommerzieller Ofenruß (furnace black) eingesetzt. Der Wert der BET-Oberfläche gemäß der ASTM-Norm D 6556-04 betrug <100 m²/g.

### Graphitpartikel

Es wurden synthetische Graphitpartikel eingesetzt. Die durchschnittliche Partikelgröße D90 gemäß ASTM-Norm D3849-87 betrug <45 µm.

### expandierter Graphit

Es wurden ein kommerziell erhältlicher expandierter Graphit mit einer Partikelgröße D90 gemäß ASTM-Norm D3849-87 von <50 µm eingesetzt.

### Porenbildner

Als Porenbildner wurden sphärische Kunststoffpartikel aus PMMA eingesetzt. Die Partikelgröße D90 gemäß ASTM-Norm D3849-87 betrug <50 µm.

### Herstellungsbeispiel 1

Zur Herstellung eines flächigen elektrisch leitfähigen Materials wurde ein Vliesstoff aus 100% Kohlenstofffasern mit einer gemäß Tabelle 2 eingesetzt. Zur Ausrüstung des Vliesstoffs wurde eine Imprägnierzusammensetzung gemischt, die bezogen auf den Feststoff 70 % Ruß und 30 % PTFE enthielt. Die Ausrüstung erfolgte durch Foulard-Imprägnierung mit einer wässrigen Dispersion mit 15 % Ausrüstungsgewicht bezogen auf die Masse des GDL-Substrat (entsprechend 10 g/m²). Anschließend erfolgte noch eine Trocknung für 5 Minuten bei 160 °C und eine Sinterung für 10 Minuten bei 400 °C.

Auf das so erhaltene Substrat wurden dann zur Herstellung der erfindungsgemäßen Gasdiffusionslagen eine erste innere und eine zweite äußere MPL-Beschichtung aufgebracht. Die Vergleichs-Gasdiffusionslagen weisen nur eine einschichtige MPL-Lage auf. Die Zusammensetzung der Beschichtungsmittel (Pasten) zur Herstellung der MPLs ist in Tabelle 1 wiedergegeben. Das Ausrüstungsgewicht betrug für die erfindungsgemäßen Gasdiffusionslagen 10 g/m² für die innere Schicht und 5 g/m² für die äußere Schicht. Für die Vergleichs-Gasdiffusionslagen betrug das Ausrüstungsgewicht 25 g/m² für Vergleichsbeispiel V1 und 15 g/m² für Vergleichsbeispiel V2.

**Tabelle 1: Zusammensetzung der Pasten zur Herstellung der MPLs**

| Paste Nr. | PTFE [Gew.-%]¹⁾ | Ruß [Gew.-%]¹⁾ | Graphit [Gew.-%]¹⁾ | Porenbildner [Gew.-%]¹⁾ | Feststoffgehalt [Gew.-%]¹ |
|---|---|---|---|---|---|
| 1 | 2,0 | 8,0 | 0 | 0 | 10,0 |
| 2 | 2,1 | 4,0 | 4,0 | 0,4 | 10,5 |
| 3 | 1,0 | 4,0 | 0 | 0 | 5,0 |
| 4 | 1,0 | 1,0 | 3,0 (Exp. Gr.) | 0 | 5,0 |

| | | | | | |
|---|---|---|---|---|---|
| 1) jeweils bezogen auf das Gesamtgewicht der Paste Exp. Gr. = expandierter Graphit | | | | | |

Für die MPL-Beschichtung wurde auf das Fasermaterial zunächst durch Rakeln die MPL-Paste zur Herstellung der inneren Schicht aufgetragen, die als polymeres Bindemittel PTFE sowie Ruß, gegebenenfalls Graphitpartikel und gegebenenfalls einen weiteren Porenbildner in destilliertem Wasser enthielt. Anschließend wurde das Fasermaterial bei 120 °C getrocknet. Dann wurde bei den erfindungsgemäßen Gasdiffusionslagen durch Rakeln die MPL-Paste zur Herstellung der äußeren Schicht aufgetragen, die als polymeres Bindemittel PTFE sowie Ruß und/oder expandierten Graphit enthielt.

Anschließend wurde das Fasermaterial bei 120 °C getrocknet und bei 400 °C gesintert. Die resultierende MPL-Beladung ist in Tabelle 2 wiedergegeben. Die Werte der anwendungstechnischen Messungen sind in Tabelle 3 wiedergegeben.

### II) Anwendungstechnische Messungen

**Tabelle 2**

| | Beispiele | | | |
|---|---|---|---|---|
| | V1^{a)} | V2^{a)} | 1 | 2 |
| Innere MPL-Schicht B1) | Nr. 1 | Nr. 2 | Nr. 2 | Nr. 2 |
| Äußere MPL-Schicht B2) | ohne | ohne | Nr. 3 | Nr. 4 |
| Ausrüstungsgewicht | 25 | 15 | 10 (innere) | 10 (innere) |
| MPL [g/m²] | | | 5 (äußere) | 5 (äußere) |

**Tabelle 3**

| Messwerte | | | | |
|---|---|---|---|---|
| | V1^{a)} | V2^{a)} | 1 | 2 |
| MPL-Dicke bei 0,025 MPa | 170 | 172 | 169 | 172 |
| | 140 | 129 | 129 | 129 |
| MPL-Dicke bei 0,6 MPa [µm] | | | | |
| Gurley-Gaspermeabilität [s] | 43,6 | 1,2 | 106 | 1,9 |
| Trockendiffusionslänge [µm] | 629 | 460 | 613 | 603 |
| Rauheit Rₐ | 0,7 | 6,1 | 2,5 | 6,4 |
| Rauheit Rz | 4,3 | 38 | 14 | 28 |
| Größte Durchgangspore^{b)} | 6,094 | 35,52 | 19,27 | 21,32 |
| Mitttlerer Porendurchmesser^{b)} [µm] | 0,345 | 10,08 | 1,353 | 6,125 |
| O₂-Transport-widerstand [s/cm] | 3,62 | 2,64 | 3,19 | 3,04 |

| | | | | |
|---|---|---|---|---|
| a) Vergleichsbeispiel b) für die Vergleichsbeispiele V1 und V2 bezogen auf den Verbund aus Vliesstoff A) und MPL-Schicht B1); für die erfindungsgemäßen Beispiele 1 und 2 bezogen auf den Verbund aus Vliesstoff A), innere MPL-Schicht B1) und äußere MPL-Schicht B2) | | | | |

## Patentansprüche

1. Gasdiffusionslage für eine Brennstoffzelle, umfassend
A) ein flächiges elektrisch leitfähiges Fasermaterial,
B) eine mikroporöse Lage, enthaltend leitfähige Partikel in einer Matrix aus einem polymeren Bindemittel, wobei die mikroporöse Lage
B1) eine erste offenzellige Schicht auf wenigstens einer der Flächen des Fasermaterials A), und
B2) eine zweite gas- und wasserdurchlässige Schicht auf der ersten Schicht B1), die einen geringeren Porendurchmesser aufweist als die Schicht B1),
umfasst,
erhältlich durch ein Verfahren, bei dem man
i) ein flächiges elektrisch leitfähiges Fasermaterial A) bereitstellt,
ii) das in Schritt i) bereitgestellte Fasermaterial mit einem ersten Beschichtungsmittel zur Ausbildung einer ersten mikroporösen Schicht beschichtet,
wobei auf das Fasermaterial A) vor der Beschichtung in Schritt ii) ein Porenbildner aufgetragen wird und/oder das in Schritt ii) eingesetzte Beschichtungsmittel einen Porenbildner enthält,
iii) die in Schritt ii) erhaltene erste Beschichtung mit einem zweiten Beschichtungsmittel zur Ausbildung einer zweiten mikroporösen Schicht beschichtet,
iv) das in Schritt iii) erhaltene mit dem ersten und dem zweiten Beschichtungsmittel beschichtete Fasermaterial einer Behandlung zur Erzeugung von Poren aus dem Porenbildner unterzieht.

2. Gasdiffusionslage für eine Brennstoffzelle, umfassend
A) ein flächiges elektrisch leitfähiges Fasermaterial,
B) eine mikroporöse Lage, enthaltend leitfähige Partikel in einer Matrix aus einem polymeren Bindemittel, wobei die mikroporöse Lage
B1) eine erste offenzellige Schicht auf wenigstens einer der Flächen des Fasermaterials A) und
B2) eine zweite gas- und wasserdurchlässige Schicht auf der ersten Schicht B1)
umfasst,
wobei die Größe der größten Durchgangspore der Gasdiffusionslage, bezogen auf das flächige elektrisch leitfähige Fasermaterial A) und die erste Schicht B1), bestimmt durch Kapillarfluss-Porometrie-Messung nach der ASTM F-316:2003 wenigstens 30,00 µm beträgt und
wobei der mittlere Porendurchmesser der Gasdiffusionslage, bezogen auf das flächige elektrisch leitfähige Fasermaterial A), die erste Schicht B1) und die zweite Schicht B2), bestimmt durch Kapillarfluss-Porometrie-Messung nach der ASTM F-316:2003 höchstens 8,00 µm beträgt.

3. Gasdiffusionslage nach Anspruch 1 oder 2, wobei zur Ausbildung der ersten mikroporösen Schicht B1) ein Porenbildner eingesetzt wird, der ausgewählt ist unter
α Porenbildnern, die sich bei Erhitzen auf eine Temperatur oberhalb der Porenbildungstemperatur unter Bildung einer Gasphase zersetzen oder die ein Gas freisetzen, vorzugsweise ausgewählt unter
α1 Kunststoffpartikeln, vorzugsweise ausgewählt unter Acryl-Homo- und Copolymeren, Polymethyl(meth)acrylaten, Acryl-modifizierten Polystyrolen, speziell Styrol-Methylmethacrylat-Copolymeren, Polyvinylidenchlorid, etc.
α2 expandierbaren Mikrosphären, vorzugsweise expandierbaren Mikrosphären, umfassend eine thermoplastische Hülle und eine eingeschlossene gasbildende Komponente,
α3 natürlichen Polymeren, vorzugsweise ausgewählt unter Agar, Alginaten, Gelatine oder Stärke,
α4 gasfreisetzenden Verbindungen, vorzugsweise ausgewählt unter Alkali- und Ammoniumhydrogencarbonaten, Alkali- und Ammoniumcarbonaten, vorzugsweise Natriumhydrogencarbonat und/oder Ammoniumhydrogencarbonat,
β Porenbildnern, die zur Ausbildung von Poren durch Behandlung mit einem Lösungsmittel befähigt sind, vorzugsweise ausgewählt unter Zuckern,
γ Mischungen davon.

4. Gasdiffusionslage nach einem der Ansprüche 1 oder 3, wobei
zur Ausbildung der ersten mikroporösen Schicht B1) ein Porenbildner eingesetzt wird, der sich bei Erhitzen auf eine Temperatur oberhalb der Porenbildungstemperatur unter Bildung einer Gasphase zersetzt oder der ein Gas freisetzt und die Behandlung zur Erzeugung von Poren in Schritt iv) das Erhitzen auf eine Temperatur oberhalb der Porenbildungstemperatur umfasst,
oder
zur Ausbildung der ersten mikroporösen Schicht B1) ein Porenbildner eingesetzt wird, der zur Ausbildung von Poren durch Behandlung mit einem Lösungsmittel befähigt ist und die Behandlung zur Erzeugung von Poren in Schritt iv) das Eluieren des Porenbildners umfasst.

5. Gasdiffusionslage nach einem der vorhergehenden Ansprüche, wobei das zweite Beschichtungsmittel zur Ausbildung der zweiten mikroporösen Schicht B2) frei ist von zugesetzten Porenbildnern, insbesondere frei ist von Porenbildnern, die sich bei Erhitzen auf eine Temperatur oberhalb der Porenbildungstemperatur unter Bildung einer Gasphase zersetzen oder die ein Gas freisetzen und Porenbildnern, die zur Ausbildung von Poren durch Behandlung mit einem Lösungsmittel befähigt sind.

6. Gasdiffusionslage nach einem der vorhergehenden Ansprüche, wobei das Fasermaterial A) ausgewählt ist unter Kohlefaser-Vliesstoffen, Kohlefaser-Geweben, Kohlefaser-Papieren und Kombinationen davon.

7. Gasdiffusionslage nach einem der vorhergehenden Ansprüche, wobei der mittlere Porendurchmesser der Schicht B1), bestimmt durch Computertomographische Mikroskopie (µ-CT), 12,00 bis 100,00 µm, bevorzugt 15,00 bis 80,00 µm, beträgt.

8. Gasdiffusionslage nach einem der vorhergehenden Ansprüche, wobei der mittlere Porendurchmesser der Schicht B2), bestimmt durch Rasterelektronenmikroskopie (SEM), 0,005 bis 10,00 µm, bevorzugt 0,010 bis 5,00 µm, insbesondere 0,5 bis 5,00 µm, beträgt.

9. Gasdiffusionslage nach einem der vorhergehenden Ansprüche, wobei zur Ausbildung der ersten mikroporösen Schicht B1) ein erstes Beschichtungsmittel eingesetzt wird, das porositätsmodifizierende Komponenten enthält, ausgewählt unter Ruß, Graphitpartikeln und Mischungen davon, bevorzugt zur Ausbildung der ersten mikroporösen Schicht B1) ein erstes Beschichtungsmittel eingesetzt wird, das eine Mischung aus Ruß und Graphitpartikeln enthält.

10. Gasdiffusionslage nach einem der vorhergehenden Ansprüche, wobei zur Ausbildung der zweiten mikroporösen Schicht B2) ein zweites Beschichtungsmittel eingesetzt wird, das porositätsmodifizierende Komponenten enthält, ausgewählt unter Ruß, expandiertem Graphit und Mischungen davon, bevorzugt zur Ausbildung der zweiten mikroporösen Schicht B2) ein zweites Beschichtungsmittel eingesetzt wird, das als porositätsmodifizierende Komponenten ein Kohlenstoffmaterial enthält, das ausschließlich aus Ruß besteht oder das eine Mischung aus Ruß und expandierten Graphitpartikeln enthält.

11. Verfahren zur Herstellung einer Gasdiffusionslage für eine Brennstoffzelle, umfassend
A) ein flächiges elektrisch leitfähiges Fasermaterial,
B) eine mikroporöse Lage, enthaltend leitfähige Partikel in einer Matrix aus einem polymeren Bindemittel, wobei die mikroporöse Lage
B1) eine erste offenzellige Schicht auf wenigstens einer der Flächen des Fasermaterials A), und
B2) eine zweite gas- und wasserdurchlässige Schicht auf der ersten Schicht B1)
umfasst,
bei dem man
i) ein flächiges elektrisch leitfähiges Fasermaterial A) bereitstellt,
ii) das in Schritt i) bereitgestellte Fasermaterial mit einem ersten Beschichtungsmittel zur Ausbildung einer ersten mikroporösen Schicht beschichtet,
wobei auf das Fasermaterial A) vor der Beschichtung in Schritt ii) ein Porenbildner aufgetragen wird und/oder das in Schritt ii) eingesetzte Beschichtungsmittel einen Porenbildner enthält,
iii) die in Schritt ii) erhaltene erste Beschichtung mit einem zweiten Beschichtungsmittel zur Ausbildung einer zweiten mikroporösen Schicht beschichtet,
iv) das in Schritt iii) erhaltene mit dem ersten und dem zweiten Beschichtungsmittel beschichtete Fasermaterial einer Behandlung zur Erzeugung von Poren aus dem Porenbildner unterzieht.

12. Brennstoffzelle, umfassend wenigstens eine Gasdiffusionslage, wie in einem der Ansprüche 1 bis 10 definiert, oder erhältlich durch ein Verfahren, wie in Anspruch 11 definiert.

13. Brennstoffzelle nach Anspruch 12, umfassend eine Polymer-Elektrolyt-Membran, auf die eine Katalysatorschicht aufgebracht ist, wobei die Katalysatorschicht mit der Oberfläche der zweiten mikroporösen Lage B2) der Gasdiffusionslage in Kontakt ist.

14. Brennstoffzellstapel, umfassend eine Vielzahl von Brennstoffzellen, wie in einem der Ansprüche 12 oder 13 definiert.

15. Verwendung einer Gasdiffusionslage wie in einem der Ansprüche 1 bis 10 definiert, oder erhältlich durch ein Verfahren, wie in Anspruch 11 definiert, in einer Brennstoffzelle zur Verbesserung der Gas- und/oder Wasserdurchlässigkeit.
